# EUROPEAN PATENT APPLICATION

(11) **EP 3 293 695 A1**
(43) Date of publication of application: **14.03.2018**
(21) Application number: 17189891.9
(22) Date of filing: 07.09.2017
(51) Int. Cl.: G06Q 40/02, G06Q 20/00

(54) **METHOD FOR ENROLLING FINANCIAL ACCOUNT AND ELECTRONIC DEVICE FOR PERFORMING THE SAME**

(30) Priority: 07.09.2016 KR 20160114817
(71) Applicant: Samsung Electronics Co., Ltd., Gyeonggi-do 16677 (KR)
(72) Inventor: KIM, Dong Yeop, 12767 Gyeonggi-do (KR); PARK, Soo Bin, 16490 Gyeonggi-do, (KR); BAE, Gun Woo, 41578 Daegu (KR); JUN, Myung Hwa, 39304 Gyeongsangbuk-do, (KR); JANG, Dong Ho, 18325 Gyeonggi-do, (KR)
(74) Representative: HGF Limited

(57) **Abstract**

An electronic device includes a display, a local wireless communication circuit, a memory, a payment application, and a processor.. The memory is configured to store a financial application. The processor is configured to launch the financial application. The processor is also configured to output account information of a user and a graphic user interface (GUI) object associated with the account information on the display. The processor is also configured to launch the payment application in response to selecting the GUI object. The processor is also configured to transmit data of a card linked to the account information to an external device via the local wireless communication circuit.

## Description

### CROSS-REFERENCE TO RELATED APPLICATION(S) AND CLAIM OF PRIORITY

This application is related to and claims priority to Korean Application Number 10-2016-0114817 filed on September 7, 2016, the contents of which are incorporated herein by reference.

### TECHNICAL FIELD

The present disclosure relates to a method for enrolling a financial account, a payment method using an enrolled financial account, and an electronic device for performing the same.

### BACKGROUND

With the development of information technology (IT), an electronic device may rapidly become high functionality and may provide a variety of functions to its user. The electronic device may provide a multimedia service, for example, a music service, a video service, or a digital broadcast service, or a network-based communication service such as a call service, a wireless Internet service, a short message service (SMS), or a multimedia messaging service (MMS).

Recently, so-called fintech, in which a finance technique and the IT are combined, has gained popularity. The scope of the fintech evaluated as a shift in financial paradigm has been extended to an offline financial service and a service of constructing a financial platform as well as a conventional online financial service.

For example, manufacturers of electronic devices have been trying to construct a mobile payment platform and spread a mobile payment service and an advanced mobile banking from various angles.

An electronic device may use each of services of an Internet banking application and a mobile payment application by installing the Internet banking application developed by a financial institution and the mobile payment application developed by a mobile payment service provider. For example, a debit card (or a check card) linked to a financial account (e.g., a deposit and withdrawal account) may be used in both of the Internet banking application and the mobile payment application. Herein, since financial account linkage in both of the Internet banking application and the mobile payment application for an integrated service requests complicated identity authentication for each financial account, a user who will link several financial accounts should make considerable effort and time.

### SUMMARY

To address the above-discussed deficiencies, it is a primary object to provide at least the advantages described below. Accordingly, an aspect of the present disclosure is to a method for enrolling several financial accounts using only a simple user operation without harming security and a method for simply converting a financial application into a payment application upon a transaction (e.g., payment or withdrawal) using an enrolled financial account.

In accordance with an aspect of the present disclosure, an electronic device is provided. The electronic device may include a display, a local wireless communication circuit, a memory configured to store a financial application and a payment application, and a processor configured to be electrically connected with the display, the local wireless communication circuit, and the memory and launch the financial application. The processor may be configured to output account information of a user and a graphic user interface (GUI) object associated with the account information on the display, launch the payment application in response to selecting the GUI object, and transmit data of a card linked to the account information to an external device via the local wireless communication circuit.

In accordance with another aspect of the present disclosure, an electronic device is provided. The electronic device may include a display, a communication circuit configured to communicate with a server, a memory configured to store a financial application and a payment application, and a processor configured to be electrically connected with the display, the communication circuit, and the memory and launch the payment application. The processor may be configured to output a screen, where the payment application is executed, including a GUI object on the display, if the GUI object is selected, obtain identification information of the financial application and transmit the obtained identification information to the server via the communication circuit, and receive account information of a user, opened at a financial institution corresponding to the financial application, via the communication circuit from the server.

In accordance with another aspect of the present disclosure, an electronic device is provided. The electronic device may include a display, a communication circuit configured to communicate with a server, a memory configured to store a financial application, and a processor configured to be electronically connected with the display, the communication circuit, and the memory and launch the financial application. The processor may be configured to output a screen, where the financial application is executed, including a GUI object on the display, if the GUI object is selected, obtain identification information of the financial application and transmit the obtained identification information to the server, and receive account information of a user, opened at a financial institution corresponding to the financial application, via the communication circuit from the server.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

The above and other aspects, features, and advantages of certain embodiments of the present disclosure will be more apparent from the following description taken in conjunction with the accompanying drawings, in which:
FIG. 1 illustrates a block diagram depicting a configuration of an electronic device according to various embodiments of the present disclosure;
FIG. 2 illustrates a block diagram depicting a configuration of an electronic device according to various embodiments of the present disclosure;
FIG. 3 illustrates a block diagram depicting a configuration of a program module according to various embodiments of the present disclosure;
FIGS. 4A and 4B are drawings illustrating an environment where a transaction is conducted, according to various embodiments of the present disclosure;
FIG. 5 illustrates a block diagram depicting a configuration of an electronic device according to an embodiment of the present disclosure;
FIG. 6A illustrates a flowchart depicting a method for enrolling a financial account according to an embodiment of the present disclosure;
FIG. 6B illustrates a sequence diagram depicting a method for enrolling a financial account according to an embodiment of the present disclosure;
FIG. 7 illustrates a sequence diagram depicting a method for enrolling a financial account according to an embodiment of the present disclosure;
FIGS. 8A and 8B are graphic user interface (GUI) screens illustrating a method for enrolling a financial account according to various embodiments of the present disclosure;
FIG. 9 illustrates a block diagram depicting a transaction using a financial account according to an embodiment of the present disclosure;
FIG. 10 illustrates a flowchart depicting a transaction method using a financial account according to an embodiment of the present disclosure; and
FIG. 11 illustrates a GUI screen depicting a transaction method using a financial account according to an embodiment of the present disclosure.

Throughout the drawings, it should be noted that like reference numbers are used to depict the same or similar elements, features, and structures.

### DETAILED DESCRIPTION

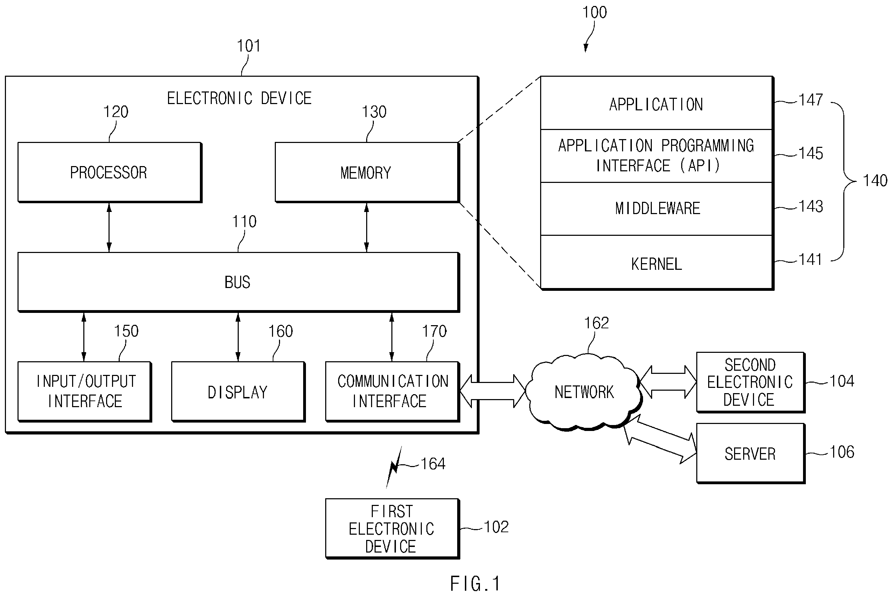

FIGS. 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, the present disclosure is described with reference to the accompanying drawings. However, the present disclosure is not intended to be limited to the specific embodiments, and it is understood that it should include all modifications and/or, equivalents and alternatives within the scope and technical range of the present disclosure. With respect to the descriptions of the drawings, like reference numerals refer to like elements.

In the disclosure disclosed herein, the expressions "have", "may have", "include" and "comprise", or "may include" and "may comprise" used herein indicate existence of corresponding features (e.g., elements such as numeric values, functions, operations, or elements) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The expressions such as "1st" "2nd", "first", or "second", and the like used in various embodiments of the present disclosure may refer to various elements irrespective of the order and/or priority of the corresponding elements, but do not limit the corresponding elements. The expressions may be used to distinguish one element from another element. For instance, both "a first user device" and "a second user device" indicate different user devices from each other irrespective of the order and/or priority of the corresponding elements. For example, a first element may be referred to as a second element and vice versa without departing from the scope of the present disclosure.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

Depending on the situation, the expression "configured to" used herein may be used as, for example, the expression "suitable for", "having the capacity to", "designed to", "adapted to", "made to", or "capable of". The term "configured to" must not mean only "specifically designed to" hardwarily. Instead, the expression "a device configured to" may mean that the device is "capable of" operating together with another device or other elements. For example, a "processor configured to perform A, B, and C" may mean a generic-purpose processor (e.g., a central processing unit (CPU) or an application processor) which may perform corresponding operations by executing one or more software programs which stores a dedicated processor (e.g., an embedded processor) for performing a corresponding operation.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

Electronic devices according to various embodiments of the present disclosure may include at least one of, for example, smart phones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. According to various embodiments, the wearable devices may include at least one of accessory-type wearable devices (e.g., watches, rings, bracelets, anklets, necklaces, glasses, contact lenses, or head-mounted-devices (HMDs)), fabric or clothing integral wearable devices (e.g., electronic clothes), body-mounted wearable devices (e.g., skin pads or tattoos), or implantable wearable devices (e.g., implantable circuits).

In various embodiments, the electronic devices may be smart home appliances. The smart home appliances may include at least one of, for example, televisions (TVs), digital versatile disk (DVD) players, audios, refrigerators, air conditioners, cleaners, ovens, microwave ovens, washing machines, air cleaners, set-top boxes, home automation control panels, security control panels, TV boxes (e.g., Samsung HomeSync®, Apple TV®, or Google TV®), game consoles (e.g., Xbox® and PlayStation®), electronic dictionaries, electronic keys, camcorders, or electronic picture frames.

In various embodiments, the electronic devices may include at least one of various medical devices (e.g., various portable medical measurement devices (e.g., blood glucose meters, heart rate meters, blood pressure meters, or thermometers, and the like), a magnetic resonance angiography (MRA), a magnetic resonance imaging (MRI), a computed tomography (CT), scanners, or ultrasonic devices, and the like), navigation devices, global navigation satellite system (GNSS), event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to various embodiments, the electronic devices may include at least one of parts of furniture or buildings/structures, electronic boards, electronic signature receiving devices, projectors, or various measuring instruments (e.g., water meters, electricity meters, gas meters, or wave meters, and the like). The electronic devices according to various embodiments of the present disclosure may be one or more combinations of the above-mentioned devices. The electronic devices according to various embodiments of the present disclosure may be flexible electronic devices. Also, electronic devices according to various embodiments of the present disclosure are not limited to the above-mentioned devices, and may include new electronic devices according to technology development

Hereinafter, electronic devices according to various embodiments will be described with reference to the accompanying drawings. The term "user" used herein may refer to a person who uses an electronic device or may refer to a device (e.g., an artificial electronic device) that uses an electronic device.

FIG. 1 illustrates a block diagram depicting a configuration of an electronic device according to various embodiments of the present disclosure.

Referring to FIG. 1, in various embodiments, an electronic device 101 may connect with a first external electronic device 102 over local-area communication 164 or may connect with a second external electronic device 104 or a server 106 over a network 162. The electronic device 101 may include a bus 110, a processor 120, a memory 130, an input/output (I/O) interface 150, a display 160, and a communication interface 170. In various embodiments, at least one of the elements of the electronic device 101 may be omitted from the electronic device 101, and other elements may be additionally included in the electronic device 101.

The bus 110 may include, for example, a circuit which connects the elements 120 to 170 with each other and sends communication (e.g., a control message and/or data) between the elements 120 to 170.

The processor 120 may include one or more of a central processing unit (CPU), an application processor (AP), or a communication processor (CP). The processor 120 may perform, for example, an arithmetic operation or data processing about control and/or communication of at least another of the elements of the electronic device 101.

The memory 130 may include a volatile and/or non-volatile memory. The memory 130 may store, for example, a command or data associated with at least another of the elements of the electronic device 101. According to an embodiment, the memory 130 may software and/or a program 140. The program 140 may include, for example, a kernel 141, a middleware 143, an application programming interface (API) 145, and/or at least one application program 147 (or "at least one application"), and the like. At least part of the kernel 141, the middleware 143, or the API 145 may be referred to as an operating system (OS).

The kernel 141 may control or manage, for example, system resources (e.g., the bus 110, the processor 120, the memory 130, or the like) used to execute an operation or function implemented in the other programs (e.g., the middleware 143, the API 145, or the application program 147). Also, as the middleware 143, the API 145, or the application program 147 accesses a separate element of the electronic device 101, the kernel 141 may provide an interface which may control or manage system resources.

The middleware 143 may play a role as, for example, a go-between such that the API 145 or the application program 147 communicates with the kernel 141 to communicate data with the kernel 141.

Also, the middleware 143 may process one or more work requests, received from the at least one application program 147, in order of priority. For example, the middleware 143 may assign priority which may use system resources (the bus 110, the processor 120, the memory 130, or the like) of the electronic device 101 to at least one of the at least one application program 147. For example, the middleware 143 may perform scheduling or load balancing for the one or more work requests by processing the one or more work requests in order of priority assigned to the at least one of the at least one application program 147.

The API 145 may be, for example, an interface in which the application program 147 controls a function provided from the kernel 141 or the middleware 143. For example, the API 145 may include at least one interface or function (e.g., a command) for file control, window control, image processing, or text control, and the like.

The I/O interface 150 may play a role as, for example, an interface which may send a command or data, input from a user or another external device, to other element(s) of the electronic device 101. Also, the I/O interface 150 may output a command or data, received from other element(s) of the electronic device 101, to the user or the other external device.

The display 160 may include, for example, a liquid crystal display (LCD), a light emitting diode (LED) display, an organic LED (OLED) display, a microelectromechanical systems (MEMS) display, or an electronic paper display. The display 160 may display, for example, a variety of content (e.g., text, an image, a video, an icon, or a symbol, and the like) to the user. The display 160 may include a touch screen, and may receive, for example, a touch, a gesture, proximity, or a hovering input using an electronic pen or part of a user's body.

The communication interface 170 may establish communication between, for example, the electronic device 101 and an external device (e.g., the first external electronic device 102, the second external electronic device 104, or the server 106). For example, the communication interface 170 may connect to the network 162 through wireless communication or wired communication and may communicate with the external device (e.g., the second external electronic device 104 or the server 106).

The wireless communication may include, for example, cellular communication which uses at least one of long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM) as a cellular communication protocol. According to an embodiment, the wireless communication may include at least one of, for example, wireless-fidelity (Wi-Fi), Bluetooth (BT), Bluetooth low energy (BLE), Zigbee, near field communication (NFC), magnetic secure transmission, magnetic stripe transmission, a radio frequency (RF), a body area network, or global navigation satellite system (GNSS).

The magnetic secure transmission or the magnetic stripe transmission may be to generate a pulse based on transmission data. The pulse may be to generate a magnetic field signal. The electronic device 101 may transmit the magnetic field signal to a point of sales (POS) terminal. The POS terminal may restore the data by detecting the magnetic field signal using a magnetic stripe reader or magnetic secure reader (MSR) and converting the detected magnetic field signal into an electric signal. The term "MST" in the specification may be used as a meaning of calling the magnetic secure transmission or the magnetic stripe transmission.

The GNSS may include, for example, at least one of a global positioning system (GPS), a Glonass, a Beidou navigation satellite system (hereinafter referred to as "Beidou"), or a Galileo (i.e., the European global satellite-based navigation system) according to an available area or a bandwidth, and the like. Hereinafter, the term "GPS" used herein may be interchangeably with the term "GNSS". The wired communication may include at least one of, for example, universal serial bus (USB) communication, high definition multimedia interface (HDMI) communication, recommended standard 232 (RS-232) communication, plain old telephone service (POTS) communication, or the like. The network 162 may include a telecommunications network, for example, at least one of a computer network (e.g., a local area network (LAN) or a wide area network (WAN)), the Internet, or a telephone network.

Each of the first and second external electronic devices 102 and 104 may be the same as or different device from the electronic device 101. According to an embodiment, the server 106 may include a group of one or more servers.

According to various embodiments, the server 106 may include a mobile payment service server for implementing a mobile payment service in the electronic device 101 and/or a payment server of a card company (and/or a financial institution). For example, the mobile payment service server may include a server (e.g., a token service provider (TSP) server) which manages a token associated with a payment application. Further, for example, the payment server of the card company (and/or the financial institution) may include a server (e.g., a trusted service manager (TSM) server) which manages a financial account of a user.

According to an embodiment, the mobile payment service server may provide payment information (e.g., a one-time token (OTT)) to the electronic device 101 whenever a payment transaction is conducted by interacting with the payment server of the card company (and/or the financial institution). After performing specified secure authentication, the electronic device 101 may transmit the received payment information to the first external electronic device 102 or the second external electronic device 104 (e.g., a POS terminal) over various channels (e.g., an MST channel, an NFC channel, and the like). Each of the first external electronic device 102 and the second external electronic device 104 may complete the payment transaction by transmitting the payment information to the payment server of the card company (and/or the financial institution) and obtaining payment approval.

According to an embodiment, a secure authentication policy applied to various payment cards may be determined by the card company and/or the financial institution (an example of a card issuer). Information (or data) including the secure authentication policy of the various payment cards may be transmitted to the electronic device 101 by the mobile payment service server and/or the server of the card company (and/or the financial institution).

According to various embodiments, all or some of operations executed in the electronic device 101 may be executed in another electronic device or a plurality of electronic devices (e.g., the first external electronic device 102, the second external electronic device 104, or the server 106). According to an embodiment, if the electronic device 101 should perform any function or service automatically or according to a request, it may request another device (e.g., the first external electronic device 102, the second external electronic device 104, or the server 106) to perform at least part of the function or service, rather than executing the function or service for itself or in addition to the function or service. The other electronic device (e.g., the first external electronic device 102, the second external electronic device 104, or the server 106) may execute the requested function or the added function and may transmit the executed result to the electronic device 101. The electronic device 101 may process the received result without change or additionally and may provide the requested function or service. For this purpose, for example, cloud computing technologies, distributed computing technologies, or client-server computing technologies may be used.

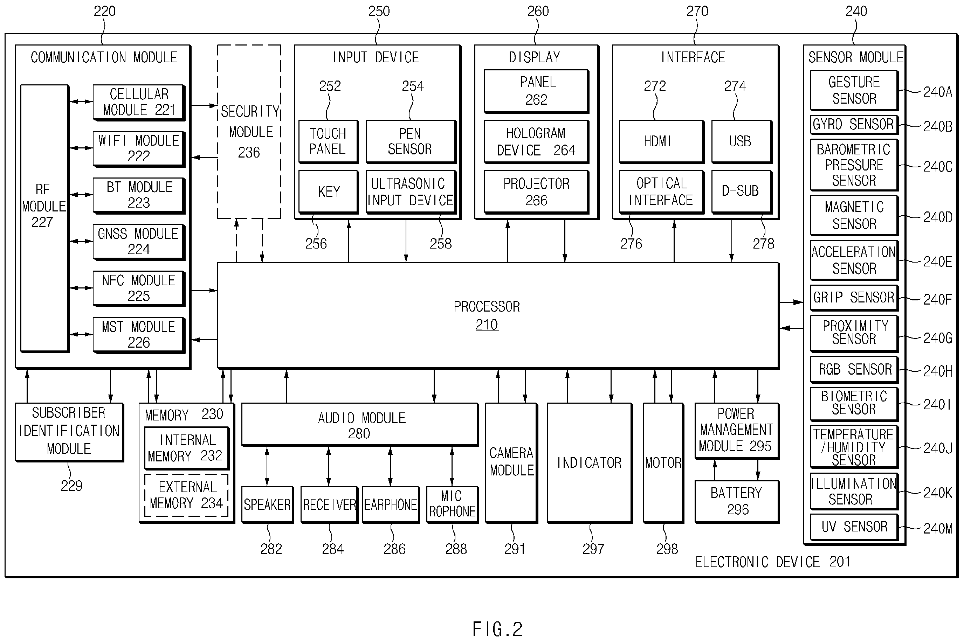

FIG. 2 illustrates a block diagram depicting a configuration of an electronic device according to various embodiments of the present disclosure.

Referring to FIG. 2, an electronic device 201 may include, for example, all or part of an electronic device 101 shown in FIG. 1. The electronic device 201 may include one or more processors 210 (e.g., application processors (APs)), a communication module 220, a subscriber identification module (SIM) 229, a memory 230, a security module 236, a sensor module 240, an input device 250, a display 260, an interface 270, an audio module 280, a camera module 291, a power management module 295, a battery 296, an indicator 297, and a motor 298.

The processor 210 may execute, for example, an operating system (OS) or an application program to control a plurality of hardware or software elements connected thereto and may process and compute a variety of data. The processor 210 may be implemented with, for example, a system on chip (SoC). According to an embodiment, the processor 210 may include a graphic processing unit (GPU) (not shown) and/or an image signal processor (not shown). The processor 210 may include at least some (e.g., a cellular module 221) of the elements shown in FIG. 2. The processor 210 may load a command or data, received from at least one of other elements (e.g., a non-volatile memory), to a volatile memory to process the data and may store various data in a non-volatile memory.

The communication module 220 may have the same or similar configuration to a communication interface 170 of FIG. 1. The communication module 220 may include, for example, the cellular module 221, a wireless-fidelity (Wi-Fi) module 222, a Bluetooth (BT) module 223, a global navigation satellite system (GNSS) module 224 (e.g., a GPS module, a Glonass module, a Beidou module, or a Galileo module), a near field communication (NFC) module 225, an MST module 226, and a radio frequency (RF) module 227.

The cellular module 221 may provide, for example, a voice call service, a video call service, a text message service, or an Internet service, and the like over a communication network. According to an embodiment, the cellular module 221 may identify and authenticate the electronic device 201 in a communication network using the SIM 229 (e.g., a SIM card). According to an embodiment, the cellular module 221 may perform at least some of functions which may be provided by the processor 210. According to an embodiment, the cellular module 221 may include a communication processor (CP).

The Wi-Fi module 222, the BT module 223, the GNSS module 224, the NFC module 225, or the MST module 226 may include, for example, a processor for processing data communicated through the corresponding module. According to various embodiments, at least some (e.g., two or more) of the cellular module 221, the Wi-Fi module 222, the BT module 223, the GNSS module 224, the NFC module 225, or the MST module 226 may be included in one integrated chip (IC) or one IC package.

The RF module 227 may communicate, for example, a communication signal (e.g., an RF signal). Though not shown, the RF module 227 may include, for example, a transceiver, a power amplifier module (PAM), a frequency filter, or a low noise amplifier (LNA), or an antenna, and the like. According to another embodiment, at least one of the cellular module 221, the Wi-Fi module 222, the BT module 223, the GNSS module 224, the NFC module 225, or the MST module 226 may communicate an RF signal through a separate RF module.

The SIM 229 may include, for example, a card which includes a SIM and/or an embedded SIM. The SIM 229 may include unique identification information (e.g., an integrated circuit card identifier (ICCID)) or subscriber information (e.g., an international mobile subscriber identity (IMSI)).

The memory 230 (e.g., a memory 130 of FIG. 1) may include, for example, an internal memory 232 or an external memory 234. The internal memory 232 may include at least one of, for example, a volatile memory (e.g., a dynamic random access memory (DRAM), a static RAM (SRAM), a synchronous dynamic RAM (SDRAM), and the like), or a non-volatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory, and the like), a hard drive, or a solid state drive (SSD)).

The external memory 234 may include a flash drive, for example, a compact flash (CF), a secure digital (SD), a micro-SD, a mini-SD, an extreme digital (xD), a multimedia card (MMC), or a memory stick, and the like. The external memory 234 may operatively and/or physically connect with the electronic device 201 through various interfaces.

The security module 236 may be a module which has a relatively higher secure level than the memory 230 and may be a circuit which stores secure data and guarantees a protected execution environment. The security module 236 may be implemented with a separate circuit and may include a separate processor. The security module 236 may include, for example, an embedded secure element (eSE) which is present in a removable smart chip or a removable SD card or is embedded in a fixed chip of the electronic device 201. Also, the security module 236 may be driven by an OS different from the OS of the electronic device 201. For example, the security module 236 may operate based on a java card open platform (JCOP) OS.

The sensor module 240 may measure, for example, a physical quantity or may detect an operation state of the electronic device 201, and may convert the measured or detected information to an electric signal. The sensor module 240 may include at least one of, for example, a gesture sensor 240A, a gyro sensor 240B, a barometric pressure sensor 240C, a magnetic sensor 240D, an acceleration sensor 240E, a grip sensor 240F, a proximity sensor 240G, a color sensor 240H (e.g., red, green, blue (RGB) sensor), a biometric sensor 240I, a temperature/humidity sensor 240J, an illumination sensor 240K, or an ultraviolet (UV) sensor 240M. Additionally or alternatively, the sensor module 240 may further include, for example, an e-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), and/or a fingerprint sensor (not shown), and the like. The sensor module 240 may further include a control circuit for controlling at least one or more sensors included therein. In various embodiments, the electronic device 201 may further include a processor configured to control the sensor module 240, as part of the processor 210 or to be independent of the processor 210. While the processor 210 is in a sleep state, the electronic device 201 may control the sensor module 240.

The input device 250 may include, for example, a touch panel 252, a (digital) pen sensor 254, a key 256, or an ultrasonic input unit 258. The touch panel 252 may use, for example, at least one of a capacitive type, a resistive type, an infrared type, or an ultrasonic type. Also, the touch panel 252 may include a control circuit. The touch panel 252 may further include a tactile layer and may provide a tactile reaction to a user.

The (digital) pen sensor 254 may be, for example, part of the touch panel 252 or may include a separate sheet for recognition. The key 256 may include, for example, a physical button, an optical key, or a keypad. The ultrasonic input unit 258 may allow the electronic device 201 to detect an ultrasonic wave generated by an input tool, through a microphone (e.g., a microphone 288) and to verify data corresponding to the detected ultrasonic wave.

The display 260 (e.g., a display 160 of FIG. 1) may include a panel 262, a hologram device 264, or a projector 266. The panel 262 may include the same or similar configuration to the display 160. The panel 262 may be implemented to be, for example, flexible, transparent, or wearable. The panel 262 and the touch panel 252 may be integrated into one module. The hologram device 264 may show a stereoscopic image in a space using interference of light. The projector 266 may project light onto a screen to display an image. The screen may be positioned, for example, inside or outside the electronic device 201. According to an embodiment, the touch panel 252 may include a pressure sensor (or a force sensor) which may measure intensity of pressure on a touch of a user. The pressure sensor may be integrated with the touch panel 252 or may be implemented with one or more sensors independent of the touch panel 252. According to an embodiment, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature 278. The interface 270 may be included in, for example, a communication interface 170 shown in FIG. 1. Additionally or alternatively, the interface 270 may include, for example, a mobile high definition link (MHL) interface, an SD card/multimedia card (MMC) interface, or an infrared data association (IrDA) standard interface.

The audio module 280 may interchangeably convert a sound into an electric signal. At least some of elements of the audio module 280 may be included in, for example, an input and output interface 150 shown in FIG. 1. The audio module 280 may process sound information input or output through, for example, a speaker 282, a receiver 284, an earphone 286, or the microphone 288, and the like.

The camera module 291 may be a device which captures a still image and a moving image. According to an embodiment, the camera module 291 may include one or more image sensors (not shown) (e.g., a front sensor or a rear sensor), a lens (not shown), an image signal processor (ISP) (not shown), or a flash (not shown) (e.g., an LED or a xenon lamp).

The power management module 295 may manage, for example, power of the electronic device 201. According to an embodiment, though not shown, the power management module 295 may include a power management integrated circuit (PMIC), a charger IC or a battery or fuel gauge. The PMIC may have a wired charging method and/or a wireless charging method. The wireless charging method may include, for example, a magnetic resonance method, a magnetic induction method, or an electromagnetic method, and the like. An additional circuit for wireless charging, for example, a coil loop, a resonance circuit, or a rectifier, and the like may be further provided. The battery gauge may measure, for example, the remaining capacity of the battery 296 and voltage, current, or temperature thereof while the battery 296 is charged. The battery 296 may include, for example, a rechargeable battery or a solar battery.

The indicator 297 may display a specific state of the electronic device 201 or part (e.g., the processor 210) thereof, for example, a booting state, a message state, or a charging state, and the like. The motor 298 may convert an electric signal into mechanical vibration and may generate vibration or a haptic effect, and the like. Though not shown, the electronic device 201 may include a processing unit (e.g., a GPU) for supporting a mobile TV. The processing unit for supporting the mobile TV may process media data according to standards, for example, a digital multimedia broadcasting (DMB) standard, a digital video broadcasting (DVB) standard, or a mediaFlo™ standard, and the like.

Each of the above-mentioned elements of the electronic device according to various embodiments of the present disclosure may be configured with one or more elements, and names of the corresponding elements may be changed according to the type of the electronic device. The electronic device according to various embodiments of the present disclosure may include at least one of the above-mentioned elements, some elements may be omitted from the electronic device, or other additional elements may be further included in the electronic device. Also, some of the elements of the electronic device according to various embodiments of the present disclosure may be combined with each other to form one entity, thereby making it possible to perform the functions of the corresponding elements in the same manner as before the combination.

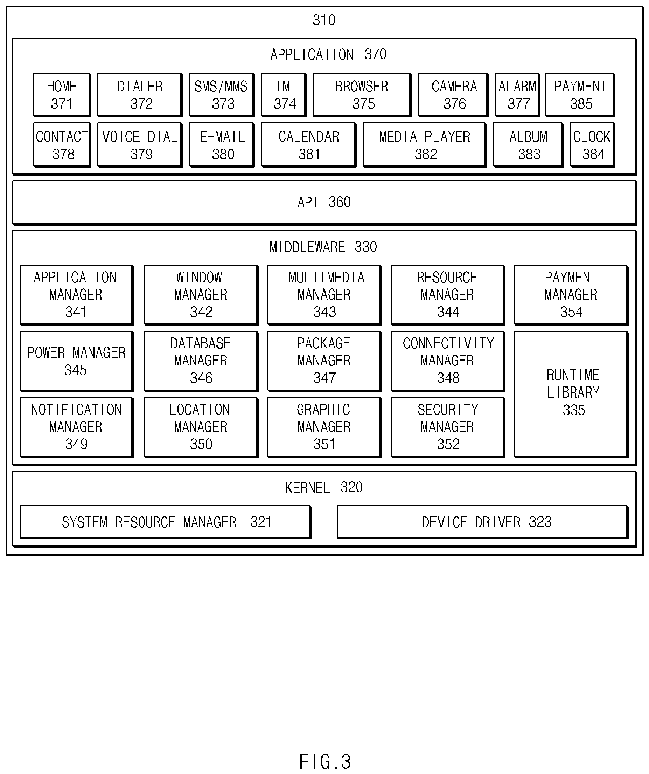

FIG. 3 illustrates a block diagram depicting a configuration of a program module according to various embodiments of the present disclosure.

According to an embodiment, a program module 310 (e.g., a program 140 of FIG. 1) may include an operating system (OS) for controlling resources associated with an electronic device (e.g., an electronic device 101 of FIG. 1) and/or various applications (e.g., at least one application program 147 of FIG. 1) which are executed on the OS. The OS may be, for example, Android, iOS, Windows, Symbian, Tizen, or Bada, and the like.

The program module 310 may include a kernel 320, a middleware 330, an application programming interface (API) 360, and/or at least one application 370. At least part of the program module 310 may be preloaded on the electronic device, or may be downloaded from an external electronic device (e.g., a first external electronic device 102, a second external electronic device 104, a server 106, or the like of FIG. 1).

The kernel 320 (e.g., a kernel 141 of FIG. 1) may include, for example, a system resource manager 321 and/or a device driver 323. The system resource manager 321 may control, assign, or collect, and the like system resources. According to an embodiment, the system resource manager 321 may include a process management unit, a memory management unit, or a file system management unit, and the like. The device driver 323 may include, for example, a display driver, a camera driver, a Bluetooth (BT) driver, a shared memory driver, a universal serial bus (USB) driver, a keypad driver, a wireless-fidelity (Wi-Fi) driver, an audio driver, or an inter-process communication (IPC) driver.

The middleware 330 (e.g., a middleware 143 of FIG. 1) may provide, for example, functions the application 370 needs in common, and may provide various functions to the application 370 through the API 360 such that the application 370 efficiently uses limited system resources in the electronic device. According to an embodiment, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, or a payment manager 354.

The runtime library 335 may include, for example, a library module used by a compiler to add a new function through a programming language while the application 370 is executed. The runtime library 335 may perform a function about input and output management, memory management, or an arithmetic function.

The application manager 341 may manage, for example, a life cycle of at least one of the at least one application 370. The window manager 342 may manage graphic user interface (GUI) resources used on a screen of the electronic device. The multimedia manager 343 may ascertain a format necessary for reproducing various media files and may encode or decode a media file using a codec corresponding to the corresponding format. The resource manager 344 may manage source codes of at least one of the at least one application 370, and may manage resources of a memory or a storage space, and the like.

The power manager 345 may act together with, for example, a basic input/output system (BIOS) and the like, may manage a battery or a power source, and may provide power information necessary for an operation of the electronic device. The database manager 346 may generate, search, or change a database to be used in at least one of the at least one application 370. The package manager 347 may manage installation or update of an application distributed by a type of a package file.

The connectivity manager 348 may manage, for example, wireless connection such as Wi-Fi connection or BT connection, and the like. The notification manager 349 may display or notify events, such as an arrival message, an appointment, and proximity notification, by a method which is not disturbed to the user. The location manager 350 may manage location information of the electronic device. The graphic manager 351 may manage a graphic effect to be provided to the user or a user interface (UI) related to the graphic effect. The security manager 352 may provide all security functions necessary for system security or user authentication, and the like. According to an embodiment, when the electronic device (e.g., the electronic device 101) has a phone function, the middleware 330 may further include a telephony manager (not shown) for managing a voice or video communication function of the electronic device.

The middleware 330 may include a middleware module which configures combinations of various functions of the above-described elements. The middleware 330 may provide a module which specializes according to kinds of OSs to provide a differentiated function. Also, the middleware 330 may dynamically delete some of old elements or may add new elements.

The API 360 (e.g., an API 145 of FIG. 1) may be, for example, a set of API programming functions, and may be provided with different elements according to OSs. For example, in case of Android or iOS, one API set may be provided according to platforms. In case ofTizen, two or more API sets may be provided according to platforms.

The application 370 (e.g., an application program 147 of FIG. 1) may include one or more of, for example, a home application 371, a dialer application 372, a short message service/multimedia message service (SMS/MMS) application 373, an instant message (IM) application 374, a browser application 375, a camera application 376, an alarm application 377, a contact application 378, a voice dial application 379, an e-mail application 380, a calendar application 381, a media player application 382, an album application 383, a timepiece application 384, a payment application 385, a health care application (e.g., an application for measuring quantity of exercise or blood sugar, and the like), or an environment information application (e.g., an application for providing atmospheric pressure information, humidity information, or temperature information, and the like), and the like.

According to an embodiment, the application 370 may include an application (hereinafter, for better understanding and ease of description, referred to as "information exchange application") for exchanging information between the electronic device (e.g., the electronic device 101) and an external electronic device (e.g., the first external electronic device 102 or the second external electronic device 104). The information exchange application may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, the environment information application, or the like) of the electronic device, to the external electronic device (e.g., the first external electronic device 102 or the second external electronic device 104). Also, the notification relay application may receive, for example, notification information from the external electronic device, and may provide the received notification information to the user of the electronic device.

The device management application may manage (e.g., install, delete, or update), for example, at least one (e.g., a function of turning on/off the external electronic device itself (or partial elements) or a function of adjusting brightness (or resolution) of a display) of functions of the external electronic device (e.g., the first external electronic device 102 or the second external electronic device 104) which communicates with the electronic device, an application which operates in the external electronic device, or a service (e.g., a call service or a message service) provided from the external electronic device.

According to an embodiment, the application 370 may include an application (e.g., the health card application of a mobile medical device) which is preset according to attributes of the external electronic device (e.g., the first external electronic device 102 or the second external electronic device 104). According to an embodiment of the present disclosure, the application 370 may include an application received from the external electronic device (e.g., the server 106, the first external electronic device 102, or the second external electronic device 104). According to an embodiment of the present disclosure, the application 370 may include a preloaded application or a third party application which may be downloaded from a server. Names of the elements of the program module 310 according to various embodiments of the present disclosure may differ according to kinds of OSs.

According to various embodiments, at least part of the program module 310 may be implemented with software, firmware, hardware, or at least two or more combinations thereof. At least part of the program module 310 may be implemented (e.g., executed) by, for example, a processor (e.g., a processor 210 of FIG. 2). At least part of the program module 310 may include, for example, a module, a program, a routine, sets of instructions, or a process, and the like for performing one or more functions.

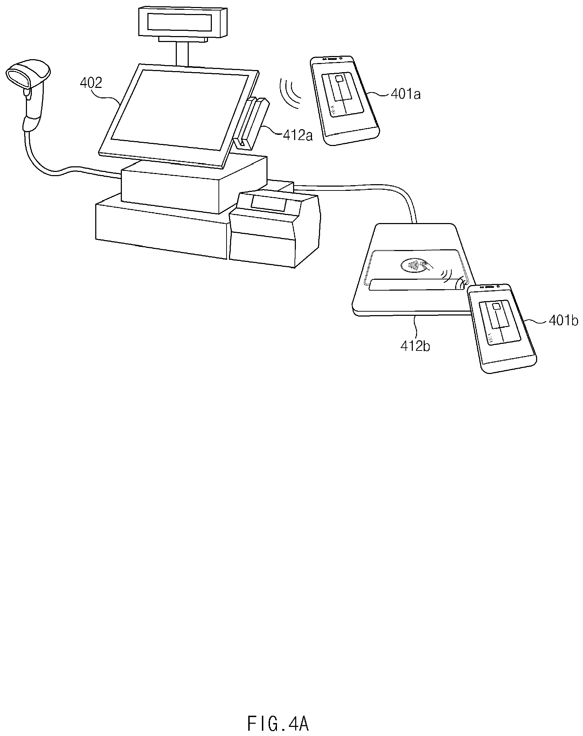

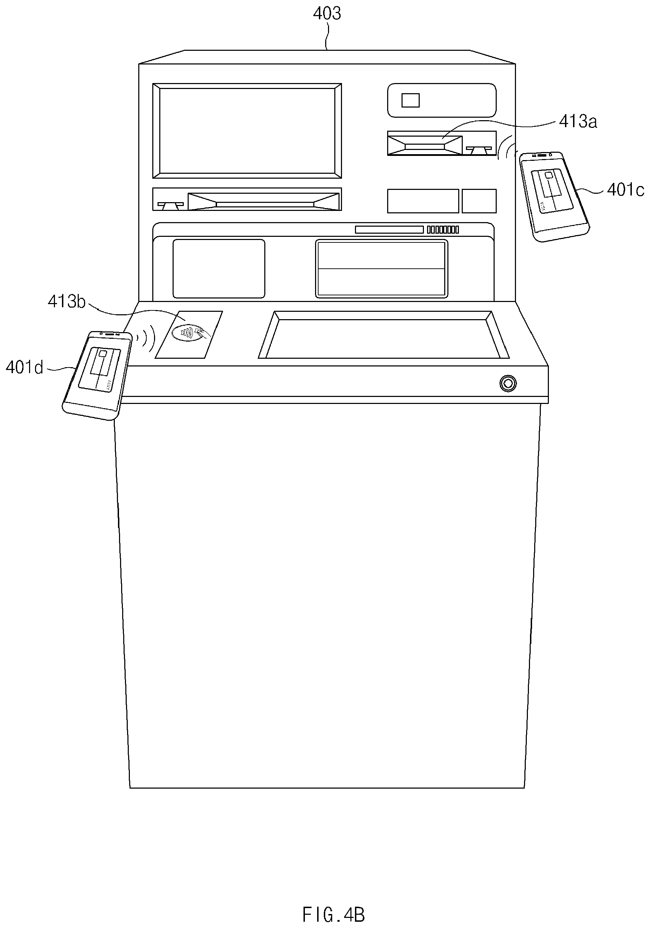

FIGS. 4A and 4B are drawings illustrating an environment where a transaction is conducted, according to various embodiments of the present disclosure.

Referring to FIG. 4A, an electronic device 401 a or an electronic device 401b according to an embodiment may wirelessly interact with an external device 402. For example, each of the electronic devices 401a and 401b may correspond to a smartphone having a local wireless communication circuit, and the external device 402 may correspond to a POS terminal. Each of the electronic devices 401a and 401b and the external device 402 may establish, for example, a secure channel for a payment transaction process. Each of the electronic devices 401a and 401b may transmit and/or receive data associated with a payment transaction with the external device 402 over the established secure channel.

According to an embodiment, the electronic device 401a and the external device 402 may communicate with each other over an MST channel. For example, if a user activates an MST module internally or externally coupled to the electronic device 401a, the electronic device 401a may generate and emit a magnetic field modulated in a specified scheme, including payment data using the activated MST module. Thereafter, if the electronic device 401a comes closer to an MST reader 412a included in the external device 402 than a specified distance (e.g., 1 cm to 5 cm), the payment data may be transmitted to the external device 402 through the emitted magnetic field.

Further, according to an embodiment, the electronic device 401b and the external device 402 may communicate with each other over an NFC channel. For example, if the user activates an NFC module internally or externally coupled to the electronic device 401b, the electronic device 401b may generate and emit an electric field (or an electromagnetic field) of a specified frequency (e.g., 13.56 MHz) including payment data using the activated NFC module. Thereafter, if the electronic device 401b comes closer to an NFC reader 412b included in the external device 402 than a specified distance (e.g., about 10 cm), the payment data may be transmitted to the external device 402 through the emitted electric field (or the emitted electromagnetic field).

According to an embodiment, the external device 402 may complete the payment transaction based on the payment data received from the electronic device 401a or the electronic device 401b. For example, the external device 402 may complete the payment transaction by interacting with a mobile payment service server and a payment server of a card company and/or a financial institution over an external network (e.g., a POS system network, the Internet, or the like).

Referring to FIG. 4B, an electronic device 401c or an electronic device 401d according to an embodiment may wirelessly interact with an external device 403. For example, each of the electronic devices 401c and 401d may correspond to a smartphone having a local wireless communication circuit, and the external device 403 may correspond to an automatic teller's machine (ATM) of a financial institution. Each of the electronic devices 401c and 401d and the external device 402 may establish, for example, a secure channel for a payment transaction process. Each of the electronic devices 401c and 401d may transmit and/or receive data associated with a payment transaction with the external device 403 over the established secure channel.

According to an embodiment, the electronic device 401c and the external device 403 may communicate with each over an MST channel. For example, if the user activates an MST module internally or externally coupled to the electronic device 401c, the electronic device 401c may generate and emit a magnetic field modulated in a specified scheme, including card data of a financial institution using the activated MST module. Thereafter, if the electronic device 401c comes closer to an MST reader 413a installed in a card insertion slot of the external device 403 than a specified distance (e.g., 1 cm to 5 cm), the card data may be transmitted to the external device 403 through the emitted magnetic field.

Further, according to an embodiment, the electronic device 401 d and the external device 403 may communicate with each other over an NFC channel. For example, if the user activates an NFC module internally or externally coupled to the electronic device 401d, the electronic device 401 d may generate and emit an electric field (or an electromagnetic field) of a specified frequency (e.g., 13.56 MHz) including card data of a financial institution using the activated NFC module. Thereafter, if the electronic device 401d comes closer to an NFC reader 413b included in the external device 403 than a specified distance (e.g., about 10 cm), the card data may be transmitted to the external device 403 through the emitted electric field (or the emitted electromagnetic field).

According to an embodiment, the external device 403 may complete the financial transaction (e.g., an account inquiry, cash withdrawal, a fund transfer, payment of utility bills, or the like) based on the card data received from the electronic device 401c or the electronic device 401d. For example, the external device 403 may complete the financial transaction by interacting with a server of the financial institution over a network (e.g., a secure intranet or the like operated by the financial institution).

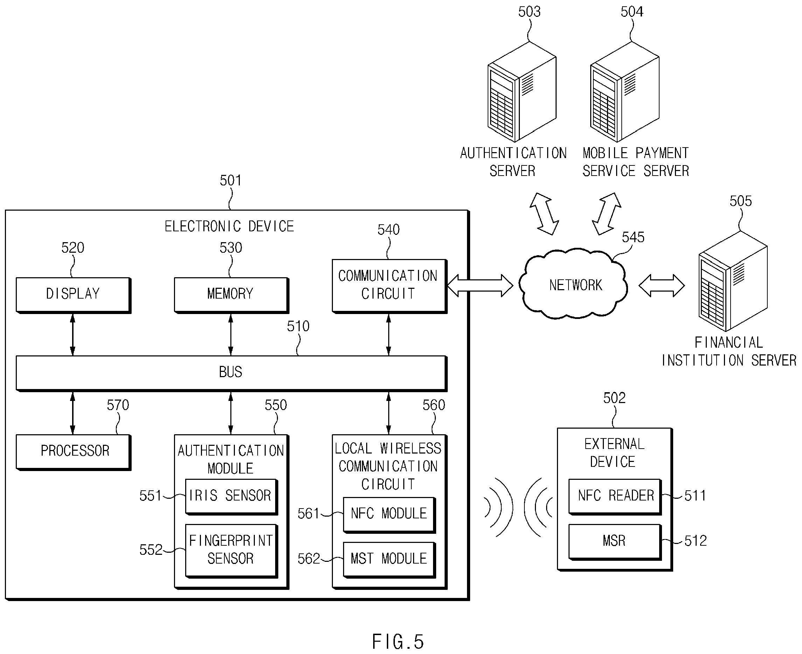

FIG. 5 illustrates a block diagram depicting a configuration of an electronic device according to an embodiment of the present disclosure.

Referring to FIG. 5, an electronic device 501 according to an embodiment may perform a payment and/or financial transaction with an external device 502 (e.g., a POS terminal of a merchant, an ATM of a financial institution, an electronic device which may perform peer-to-peer (P2P) payment or P2P remittance, or the like). The electronic device 501 may communicate with at least one of an authentication server 503, a mobile payment service server 504, and a financial institution server 505 over a network 545 to perform various embodiments of the present disclosure.

The electronic device 501 according to an embodiment may correspond to an electronic device 401 a or 401b shown in FIG. 4A or an electronic device 401c or 401d shown in FIG. 4B. Further, the external device 502 may correspond to an external device 402 shown in FIG. 4A or an external device 403 shown in FIG. 4B. The electronic device 501 may include, for example, a bus 510, a display 520, a memory 530, a communication circuit 540, an authentication module 550, a local wireless communication circuit 560, and/or a processor 570.

The bus 510 may electrically connect, for example, elements 520 to 570 of the electronic device 501 with each other. The bus 510 may include a circuit which transmits a communication message (e.g., a control message and/or data) between the elements 520 to 570.

The display 520 (e.g., a display 260 of FIG. 2) may display a variety of content (e.g., text, an image, a video, an icon, an object, a symbol, or the like) based on control of the processor 570. The display 520 may include a touch screen and may receive, for example, a touch, a gesture, proximity, or a hovering input using an electronic pen or part of a user's body.

The memory 530 (e.g., a memory 230 of FIG. 2) may store a command, information, a program, or data associated with an operation of each of the elements 520 and 540 to 570 included in the electronic device 501. For example, the memory 530 may store a financial application and a payment application. Part of the financial application may be programmed based on a software development kit (SDK) of the payment application. In other words, the financial application may include an API of the payment application.

Further, for example, the memory 530 may store instructions, when executed, for causing the processor 570 to perform various operations described herein. The instructions may be implemented with, for example, software such as an application program, an OS, or firmware, and may be stored in the memory 530 or may be embedded in hardware.

According to various embodiments, the memory 530 may include a security module (e.g., a security module 236 of FIG. 2). The security module (not shown in FIG. 5) may store information (or data) associated with a card. For example, the card data (or card information) may include at least one of a primary account number (PAN) of a card connected with a financial account, a token, a one-time token (OTT), or a cryptogram with which at least part of the PAN is replaced. For example, the token may observe an Europay Mastercard and Visa (EMV) tokenization standard.

According to an embodiment, the security module (not shown in FIG. 5) which may refer to a "memory" may be implemented with, for example, a secure element (SE), an embedded SE (eSE), a universal integrated circuit card (UICC), an embedded UICC (eUICC), a micro secure digital (SD) card, a subscriber identification module (SIM) card, a trust zone which is a storage (or memory) securely protected from unauthorized access, or the like.

The communication circuit 540 (e.g., a communication module 220 of FIG. 2) may communicate with at least one of the authentication server 503, the mobile payment service server 504, and the financial institution server 505 based on a specified protocol in the network 545.

The authentication module 550 may include various sensors, an interface, or the like for determining whether a user of the electronic device 501 is a legitimate user. For example, the authentication module 550 may include an input device (e.g., a touch screen panel, or a physical key) for performing personal identification number (PIN) authentication and a biometric sensor (e.g., a biometric sensor 240I of FIG. 2) for authenticating the user based on a biometric feature originated from a body of the user.

The authentication module 550 may convert information (query) (e.g., a user input PIN or biometric information) input from the user into a digital value and may provide the converted digital value to the processor 570. The processor 570 may compare the converted digital value with a value registered in the memory 530 or the authentication server 503. The processor 570 may authenticate a legitimate user based on the compared result. According to various embodiments, the comparison and the user authentication may be performed using a computing resource of a driver IC embedded in the authentication module 550.

According to an embodiment, the authentication module 550 may include an iris sensor 551 and a fingerprint sensor 552. According to various embodiments, each of the iris sensor 551 and the fingerprint sensor 552 may correspond to an example. An example of the authentication module 550 is not limited thereto.

The fingerprint sensor 552 may detect a fingerprint of a finger of the user. For example, a fingerprint of a finger may be captured by the fingerprint sensor 552. The fingerprint sensor 552 may be classified as an optical type, an ultrasonic type, or a capacitive type according a physical quantity used to capture the fingerprint image. As another example, an area type of recognizing a fingerprint for each face or a swipe type of recognizing a fingerprint for each line may be applied to the fingerprint sensor.

According to various embodiments, an IC embedded in the fingerprint sensor 552 (hereinafter referred to as "fingerprint sensor IC") may scan a fingerprint detection region. The fingerprint sensor IC may capture a fingerprint image through the scanning. The fingerprint sensor IC may extract, for example, a unique feature of a fingerprint from the fingerprint image and may convert the extracted feature into a digital value, thus providing the converted digital value to the processor 570. For example, the extracted feature, in other words, fingerprint minutiae may include various minutiae such as a ridge ending, a crossover, a bifurcation, and a pore, included in a fingerprint. The processor 570 may compare the extracted feature with a feature (reference biometric information) of a fingerprint previously stored (previously registered) in the memory 530 or the authentication server 503. The processor 570 may authenticate whether a fingerprint including the extracted feature is a fingerprint of a legitimate user, based on the compared result.

The iris sensor 551 (or an iris scanner) may analyze wrinkles formed in an iris of the user and may provide the analyzed result to the processor 570. For example, the iris sensor 551 may include a light source for providing constant light (e.g., an infrared ray or the like) to the iris of the user, a camera for capturing an iris image based on light reflected from the iris, and an image processing IC for analyzing and encoding minutiae (or a pattern) included in the iris image. The image processing IC may provide the analyzed result to the processor 570. According to various embodiments, the camera for capturing the iris image may correspond to a dedicated (infrared) camera for iris image capture or may correspond to a camera located in a front surface of the electronic device 501 (e.g., a surface in which the display 520 is located).

For example, the processor 570 may operate the light source and the camera included in the iris sensor 551 at a low frame rate. If an image is captured by the camera, the captured image may be transmitted to the image processing IC. The image processing IC may determine whether there is a face of the user in the transmitted image. If there is the face of the user in the transmitted image, the image processing IC may report the result to the processor 570. The processor 570 may operate the light source and the camera included in the iris sensor 551 at a high frame rate and may perform an operation for the above-mentioned iris recognition. The processor 570 may compare a feature or pattern of the recognized iris with a reference feature or pattern (i.e., reference biometric information) of an iris, previous stored (registered) in the memory 530 or the authentication server 503. The processor 570 may authenticate whether the iris having the recognized feature or pattern is an iris of a legitimate user, based on the compared result.

The local wireless communication circuit 560 may wirelessly transmit information (or data) associated with a payment card to an external device 502. For example, the local wireless communication circuit 560 may transmit the information to the external device 502 over a specified wireless channel (e.g., an NFC channel, an MST channel, or the like). For another example, as the mobile payment service server 504 and the financial institution server 505 interact with each other for each transaction, the local wireless communication circuit 560 may receive a variety of information associated with a generated card and may transmit the received information to the external device 502 over a wireless channel (e.g., an NFC channel, an MST channel, or the like).

In FIG. 5, an embodiment is exemplified as the local wireless communication circuit 560 is embedded in the electronic device 501. However, according to various embodiments, the local wireless communication circuit 560 may be implemented as a dedicated device (or an accessory) and may be electrically coupled to the electronic device 501 via a specified interface (e.g., an earphone port of 3.5 mm, a universal serial bus (USB) port, or the like).

According to an embodiment, the local wireless communication circuit 560 may include an NFC module 561 and an MST module 562. In FIG. 5, an embodiment is exemplified as the local wireless communication circuit 560 includes the NFC module 561 and the MST module 562. However, embodiments are not limited thereto. For example, the local wireless communication circuit 560 may include a radio frequency identification (RFID) tag.

The NFC module 561 (e.g., an NFC module 225 of FIG. 2) may include, for example, an NFC controller (or an NFC driver) and an RF module driven by the NFC controller. The NFC controller may convert information associated with a payment card into an electric signal and may transmit the electric signal to the RF module. The RF module may communicate, for example, information associated with a payment card with the external device 502 using electromagnetic induction based on the electric signal received from the NFC controller.

The MST module 562 (e.g., an MST module 226 of FIG. 2) may include, for example, an MST controller (or an MST driver) and an inductor driven by the MST controller. The MST controller may convert information associated with a payment card into an electric signal (e.g., a pulse stream) and may transmit the electric signal to the inductor. The inductor may generate, for example, a magnetic field fluctuation (e.g., a magnetic impulse) modulated in a specified scheme based on the electric signal received from the MST controller and then transmit the information associated with the payment card to the external device 502 through the magnetic field fluctuation.

The processor 570 (e.g., a processor 210 of FIG. 2) may be electrically connected with, for example, the elements 510 to 560 included in the electronic device 501 and may execute an arithmetic operation or data processing about control and/or communication of the elements 510 to 560 included in the electronic device 501.

For example, the processor 570 may perform financial account linkage between a payment application and a financial application through an operation described below.

According to an embodiment, the processor 570 may execute or launch a payment application (e.g., "Samsung Pay™", "Apple Pay™", or the like) and/or a financial application (e.g., a mobile banking application or the like) stored in the memory 530. A specified execution screen (e.g., an activity screen according to execution of an application), in other words, a graphic user interface (GUI) screen may be output on the display 520 in response to the execution of the payment application and/or the financial application.

According to an embodiment, a screen where the payment application or the financial application is executed may include a specified GUI screen. According to various embodiments, the screen including the specified GUI object may be output on the display 520 only if user authentication using the authentication module 550 succeeds.

According to an embodiment, the specified GUI object (e.g., a button or the like) may correspond to an object implemented for financial account linkage between the payment application and the financial application. If the screen corresponds to a screen where the financial application is executed, the specified GUI object may be programmed based on an SDK of the payment application.

According to an embodiment, if the specified GUI object is selected by an input (e.g., a touch) from a user, the processor 570 may obtain identification information of the financial application and may transmit the obtained identification information to the mobile payment service server 504 via the communication circuit 540. According to various embodiments, the processor 570 may further transmit a signature indicating success of user authentication to the mobile payment service server 504 in response to the selection of the specified GUI object.

For example, the processor 570 may receive a list of financial applications of a financial institution, which allows account linkage with the payment application, from the mobile payment service server 504. For example, the mobile payment service server 504 may generate the list based on information provided from servers of a plurality of financial institutions. The processor 570 may obtain identification information of a financial application installed in the electronic device 501 (or stored in the memory 530) among the financial applications included in the list.

For example, if the payment application is launched, the payment application may transmit a control message (e.g., an explicit intent or an implicit intent) for requesting identification information of an installed financial application to an operating system (OS) (framework) of the electronic device 501 and may obtain the identification information of the installed financial application in response to the control message. For another example, if the financial application is launched, the financial application may obtain its identification.

According to various embodiments, the electronic device 501 may obtain identification information of the financial application based on selection of the user through a specific GUI. In other words, a specific financial application (or specific financial applications) may be selected by the user, and its (or their) identification information may be obtained.

According to an embodiment, the processor 570 may receive at least one account information from the mobile payment service server 504 as a response to the transmission of the identification information and/or the signature. For example, the at least one account information may include account information of the user, opened in a financial institution corresponding to the financial application.

For example, first account information of the user, opened at a financial institution, may be previously registered in the electronic device 501 (or the payment application of the electronic device 501). In this case, the processor 570 may receive second account information of the user, opened at the financial institution, from the mobile payment service server 504. The second account information may correspond to all or some of a plurality of other account information opened at the financial institution by an owner of the first account information.

For another example, the user may have an account, opened at the financial institution, which is not enrolled in the payment application. In this case, the electronic device 501 may perform user authentication (or identity authentication) using the authentication module 550 and/or through interaction with the authentication server 503. Thereafter, the electronic device 501 may receive all account information of the user, opened at the financial institution, or some account information selected based on a user input from the mobile payment service server 504.

According to an embodiment, the processor 570 may enroll account information received from the mobile payment service server 504 in the payment application. Subsequently, the processor 570 may link the received account information to corresponding (or previously generated) card data. Alternatively, the processor 570 may generate the received account information as corresponding card data.

Meanwhile, the processor 570 may perform, for example, a transaction using a card linked to account information, through the following operation.

According to an embodiment, the processor 570 may execute or launch a financial application (e.g., a mobile banking application or the like) stored in the memory 530. A specified execution screen (e.g., an activity screen according to execution of an application), in other words, a GUI screen may be output on the display 520 in response to the execution of the financial application.

According to an embodiment, a screen where the financial application is executed may include account information of the user and a GUI object associated with the account information. According to various embodiments, the screen including the account information and the GUI object may be output on the display 520 only if user authentication using the authentication module 550 succeeds.

According to an embodiment, the GUI object (e.g., a button or the like) may correspond to an object implemented to initiate a transaction (e.g., a payment transaction or the like) based on account information associated with the GUI object. For example, the GUI object may be programmed based on an SDK of the payment application.

According to an embodiment, the processor 570 may execute or launch the payment application in response to selecting the GUI object. The processor 570 may transmit data of a card linked to the account information to the external device 502 via the local wireless communication circuit based on the payment application.

An embodiment is exemplified as the described operation of the processor 570. Embodiments are not limited thereto. For example, an operation of processor(s) described below or in another portion of the present disclosure may be understood as an operation of the processor 570. Further, in the present disclosure, for example, at least some of operations described as operations of an "electronic device", an "application (e.g., a payment application or a financial application)", or a "framework" may also be understood as operations of the processor 570.

The external device 502 may include, for example, a POS terminal installed in an affiliated store, an ATM of a financial institution, or an electronic device which may perform P2P payment or P2P remittance. The external device 502 may complete a transaction based on information (or data) associated with a card, received from the electronic device 501.

According to an embodiment, the external device 502 may include a local wireless communication circuit for wirelessly communicating information (or data) associated with a card with the electronic device 501. For example, the external device 502 may include the NFC reader 511 corresponding to the NFC module 561 of the electronic device 501 and/or a magnetic stripe reader or magnetic secure reader (MSR) 512 corresponding to the MST module 562 of the electronic device 501. Although not illustrated in FIG. 5, the external device 502 may include a communication circuit for connecting to the network 545, a processor for processing various financial transactions, or the like other than the elements.

According to an embodiment, the NFC reader 511 may communicate data about a payment transaction with the electronic device 501 through electromagnetic induction. For example, the NFC reader 511 may restore payment data received from the NFC module 561 of the electronic device 501 to an electric signal and may progress and complete a financial payment process based on the electric signal.

According to an embodiment, the MSR 512 may receive data about a payment transaction by detecting a magnetic field fluctuation caused by the MST module 562 of the electronic device 501. For example, the MSR 512 may restore payment data received from the MST module 562 of the electronic device 501 into an electric signal and may progress and complete a financial transaction process based on the electric signal.

The authentication server 503 may perform user authentication or identity authentication according to a request of the electronic device 501, the mobile payment service server 504, or the financial institution server 505. The authentication server 503 may include, for example, a fast identity online (FIDO) server, and a mobile network operator (MNO) server.

The mobile payment service server 504 may be operated by, for example, the same entity as a payment application installed in the electronic device 501. The mobile payment service server 504 may be referred to as a "mobile payment gateway server". The mobile payment service server 504 may perform account linkage through interaction with the financial institution server 505.

The financial institution server 505 may be a server operated by a financial institution such as a bank, a securities firm, a card company, or an insurance company. The financial institution server 505 may be operated by, for example, the same entity as a financial application installed in the electronic device 501. In FIG. 5, an embodiment is exemplified as a single financial institution server 505. However, the number of financial institution servers is not limited thereto. The financial institution server 505 may perform a requested transaction by interacting with the electronic device 501, the authentication server 503, and/or the mobile payment service server 504.

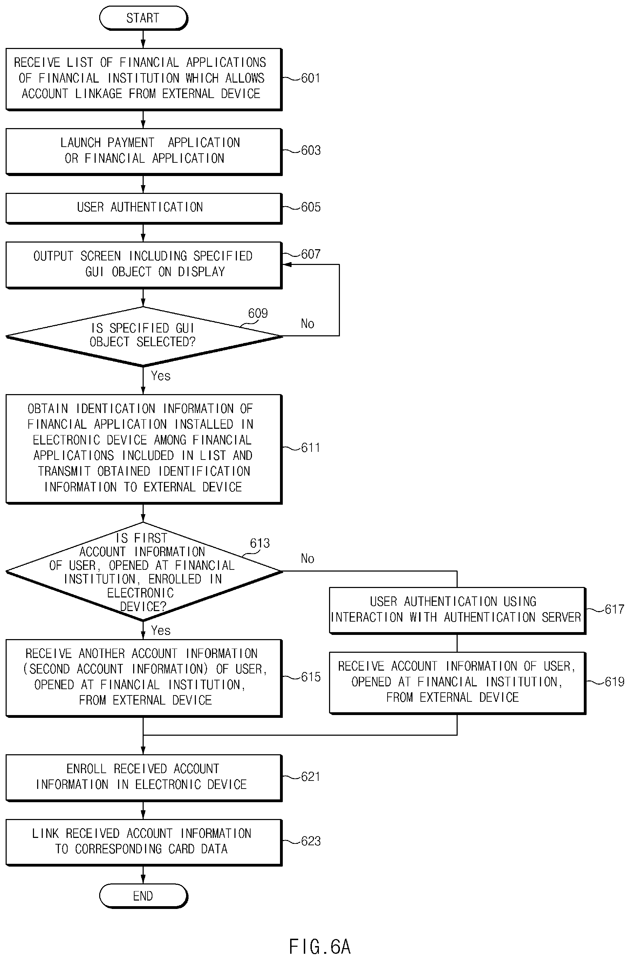

FIG. 6A illustrates a flowchart depicting a method for enrolling a financial account according to an embodiment of the present disclosure.

Referring to FIG. 6A, the method for enrolling the financial account according to an embodiment may include operations 601 to 623. Operations 601 to 623 may be performed by, for example, an electronic device 501 shown in FIG. 5. Each of operations 601 to 623 may be implemented with, for example, instructions performable (or executable) by a processor 570 of the electronic device 501. The instructions may be stored in, for example, a computer storage medium or a memory 530 of the electronic device 501 shown in FIG. 5. Hereinafter, reference numerals of FIG. 5 will be used in describing operations 601 to 623.

In operation 601, the processor 570 of the electronic device 501 may receive a list of financial applications of a financial institution which allows financial account linkage from a mobile payment service server 504. The list may be generated from interactions between the mobile payment service server 504 and the at least one financial institution server 505.

In operation 603, the processor 570 may launch a payment application or a financial application. A specified execution screen (e.g., a log-in screen) may be output on a display 520 in response to execution of the payment application and/or the financial application.

In operation 605, the processor 570 may perform user authentication using an authentication module 550. For example, the user authentication may include personal identification number (PIN) authentication, iris authentication, and fingerprint authentication. If the user authentication succeeds, the processor 570 may proceed with operation 607.

In operation 607, the processor 570 may output a screen including a specified GUI object on the display 520. According to an embodiment, the specified GUI object (e.g., a button or the like) may correspond to an object implemented for financial account linkage between the payment application and the financial application. If the execution screen corresponds to a screen where the financial application is executed, the specified GUI object may be programmed based on an SDK of the payment application.

In operation 609, the processor 570 may determine whether the specified GUI object is selected. If the specified GUI object is selected, the processor 570 may proceed with operation 611. If the specified GUI object is not selected, the processor 570 may return to operation 607.

In operation 611, the processor 570 may obtain identification information of a financial application installed in the electronic device 501 among the financial applications included in the list received in operation 601 and may transmit the obtained identification information to a mobile payment service server 504. According to an embodiment, the processor 570 may transmit a signature indicating success of user authentication to the mobile payment service server 504 in response to the selection of the specified GUI object.

For example, if the payment application is launched in operation 603, the payment application may transmit a control message (e.g., an explicit intent or an implicit intent) for requesting the identification information of the installed financial application to an OS (payment framework) of the electronic device 501 and may obtain the identification information of the installed financial application in response to the control message. For another example, if the financial application is launched in operation 603, the financial application may obtain its identification information. According to various embodiments, the electronic device 501 may obtain identification information of the financial application based on selection of the user through the specified GUI object.

In operation 613, the mobile payment service server 504 in communication with a financial institution server 505 may determine whether first account information of the user opened at the financial institution server 505 is enrolled in the payment application installed in the electronic device 501. If the first account information is enrolled in the payment application, may proceed with operation 615. If the first account information is not enrolled in the electronic device 501, the mobile payment service server 504 may proceed with operation 617.

Since the first account information is enrolled in the payment application, in operation 615, the mobile payment service server 504 may retrieve another account information (second account information) of the user opened at the financial institution server 505 in communication with the financial institution server 505 and transmit said another account information (second account information) to the electronic device 501. As such, the electronic device 501 may receive another account information (second account information) from the mobile payment service server 504. The second account information may correspond to, for example, all or some account information opened at the same financial institution server 505 owned by the same owner of the first account information.

Since the first account information is not enrolled in the electronic device 501 (or the payment application of the electronic device 501), in operation 617, the processor 570 of the electronic device 501 may perform user authentication (or identity authentication) using the authentication module 550 and/or interaction with an authentication server 503.

If the user authentication in operation 617 succeeds, in operation 619, the processor 570 of the electronic device 501 may receive all account information of the user, opened at the financial institution (which operates the financial institution server 505), or account information selected based on a user input from the mobile payment service server 504.

In operation 621, the processor 570 may enroll the account information received from the mobile payment service server 504 in the payment application.

In operation 623, the processor 570 may link the received account information to corresponding (or previously generated) card data. Alternatively, the processor 570 may generate card data corresponding to the received account information.

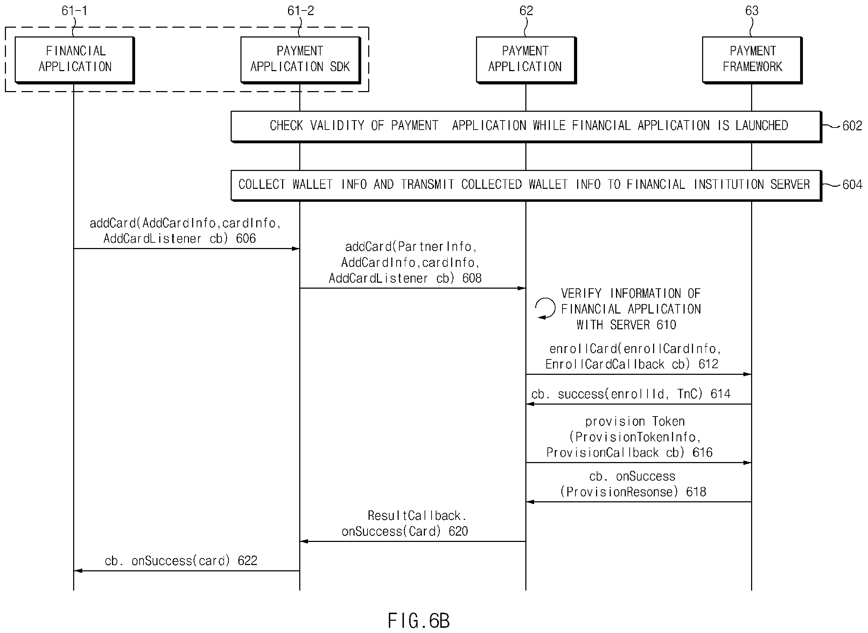

FIG. 6B illustrates a sequence diagram depicting a method for enrolling a financial account according to an embodiment of the present disclosure.

Referring to FIG. 6B, a financial application 61-1 (an example of a partner application), a payment application SDK (61-2), a payment application 62, and a payment framework 63 are shown. The elements 61-1, 61-2, 62, and 63 may be software elements executed and implemented by a processor (e.g., a processor 570 of FIG. 5) of an electronic device. An operation of each of the elements 61-1, 61-2, 62, and 63 may be understood as an operation of the processor. According to various embodiments, the payment application SDK 61-2 may be an SDK distributed by a developer of the payment application 62 and may include an API for linking the financial application 61-1 with the payment application 62. The payment application SDK 61-2 may be configured as part of the financial application 61-1.

In operation 602, the financial application 61-1 may verify availability of the payment application 62, for example, whether the payment application 62 of a proper version is effectively installed while the financial application 61-1 is launched by the processor or whether the payment application 62 is prepared for interaction with the financial application 61-1. For example, if the availability is verified, the financial application 61-1 may output a screen including a button (an example of a GUI object) of "adding a card (or account) to a payment application" on a display (e.g., a display 520 of FIG. 5).

Before adding the card (or account), in operation 604, the financial application 61-1 may collect information (or WalletInfo.) of the payment application 62 and may transmit the information of the payment application 62 to a financial institution server to obtain card (or account) data previously enrolled in the payment application 62. If verifying such requirements (in general, a credit/debit card has them), the financial application 61-1 may call an API ("getWalletInfo.") for obtaining card (or account) detailed information enrolled in the payment application 62 of a user. Thereafter, the financial application 61-1 may call an API for adding a new card (or account).

In operation 606, the financial application 61-1 may transmit a control message ("addCard") of instructing to add a card (or account) to the payment application SDK 61-2. The control message ("addCard") may be transmitted to the payment application SDK 61-2 in response to selection of a specified GUI object, for example, a button of "adding a card (or account) to a payment application". According to an embodiment, the control message ("addCard") may include information ("AddCardInfo") of instructing to add a card (or account), information ("CardInfo") of a card (or account) to be added, and a callback ("AddCardListener cb") of a card add listener.

In operation 608, the payment application SDK 61-2 may transmit the control message ("addCard") to the payment application 62 based on the message transmitted in operation 606. For example, the payment application SDK 61-2 may further include information ("PartnerInfo") of the financial application 61-1 (an example of the partner application) in the control message ("addCard") transmitted in operation 606 and may transmit the control message to the payment application 62.

In operation 610, the payment application 62 may verify the information ("PartnerInfo") of the financial application 61-1 (an example of the partner application) with a server (e.g., a mobile payment service server) based on the information included in the control message ("addCard") received in operation 608. If the verification fails due to a problem on a network, the payment application 62 may verify information of the financial application 61-1 using an accesskey previously stored in a memory (e.g., a memory 530 of FIG. 5).

If the verification succeeds, the payment application 62 may verify whether a caller has permission to call a specific API. Further, the payment application 62 may verify whether the caller uses the payment application 62 requested by the minimum (or more) payment application SDK 61-2.

Thereafter, the payment application 62 may use a variety of APIs (e.g., "enrollCard", "provisionToken", "ResultCallback selectldv", "Verifyldv", and the like) to complete enrollment of a card (or account) on the payment application 62. Further, the payment application 62 may use card (or account) enrollment information and a "CardRefInfo (EnrolcardInfo, cardRefInfo)" object for passing "cardEntryMode" set to "APP".

In operation 612, the payment application 62 may transmit a control message ("enrollCard") for requesting to enroll a card (or account) to the payment framework 63. The control message ("enrollCard") may include information ("enrollCardInfo") of a card (or account) to be enrolled and a callback ("EnrollCardCallback cb") of a card (or account) to be enrolled.

According to an embodiment, after receiving the control message ("enrollCard"), if a card entry mode ("cardEntryMode") is "APP", the payment framework 63 may omit validation of a PAN and "TalktoPay provider". Further, the payment framework 63 may generate an enroll request and may transmit the enroll request to the server (e.g., the mobile payment service server).

In operation 614, the payment framework 63 may provide a callback control message ("cb.success") indicating success in enrolling the card (or account) to the payment application 62. The callback control message ("cb.success") may include an enroll ID (enrollId) and a TnC. Receiving the callback control message ("cb.success"), the payment application 62 may directly call provisioning if the TnC is valid.

In operation 616, the payment application 62 may transmit a control message ("provisionToken") indicating provisioning of a token to the payment framework 63. The control message ("provisionToken") may include information ("ProvisionTokenInfo") of a provisioning token and a provisioning callback ("ProvisionCallback cb").

In operation 618, the payment framework 63 may transmit a callback control message ("cb.onSuccess") indicating success in enrolling the card (or account) and/or token provisioning success to the payment application. The callback control message ("cb.onSuccess") may include a provisioning response ("ProvisionResponse").

According to an embodiment, if an idv option is received, the payment application 62 may notify a user that the idv option is received and may follow an idv flow. If the idv option is not received, the payment application may show a card (or account) successively added to the user on a specified UI screen and may close the UI screen. A status of the card (or account) successively added may be referred by a callback.

In operation 620, the payment application 62 may provide a control message ("ResultCallback.onSuccess") about a callback result to the payment application SDK 61-2 based on the callback control message ("cb.onSuccess") received in operation 616. The control message ("ResultCallback.onSuccess") may include information of an enrolled or added card (or account).

In operation 622, the payment application SDK 61-2 may transmit a callback control message ("cb.onSuccess") corresponding to the control message ("ResultCallback.onSuccess") received in received in operation 620 to the financial application 61-1.

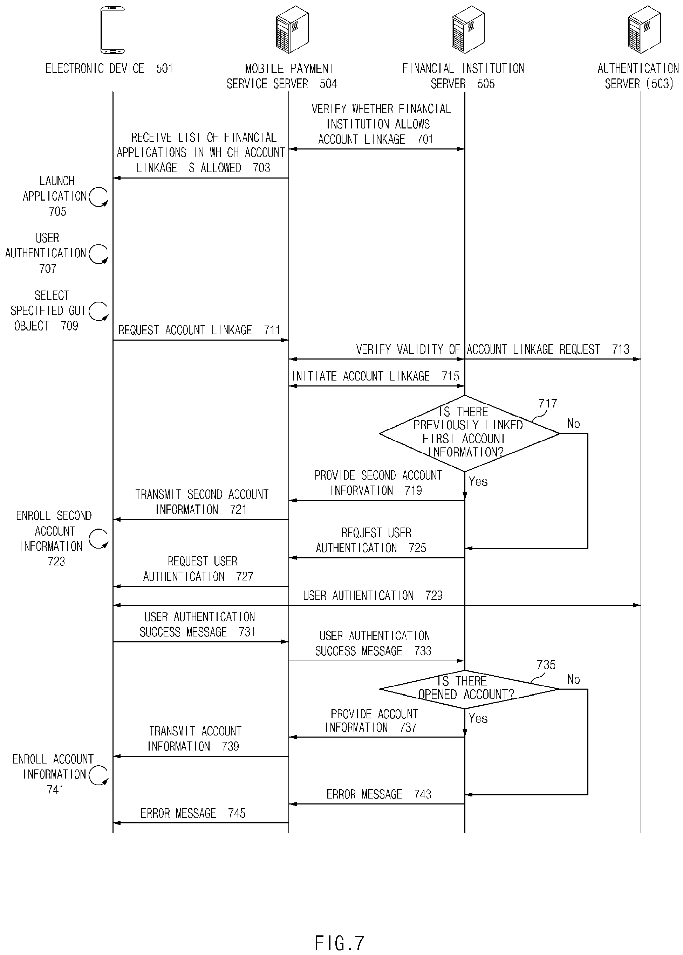

FIG. 7 illustrates a sequence diagram depicting a method for enrolling a financial account according to an embodiment of the present disclosure.

Referring to FIG. 7, the method for enrolling the financial account according to an embodiment may include operations 701 to 745. Operations 701 to 745 may be performed by interaction between, for example, an electronic device 501, a mobile payment service server 504, a financial institution server 505, and an authentication server 503 shown in FIG. 5. Hereinafter, reference numerals of FIG. 5 will be used in describing operations 701 to 745, and a description duplicated by a description of FIG. 5 will be omitted.

In operation 701, the mobile payment service server 504 may verify whether a financial institution which operates each financial institution server allows account linkage, on a periodic or aperiodic basis through interaction between the financial institution server 505 and other financial institution servers (not shown).

In operation 703, the electronic device 501 may receive a list of financial applications, in which account linkage is allowed, from the mobile payment service server 504. For example, the financial institution which operates the financial institution server 505 may allow the account linkage.

In operation 705, if a specified user input is received, the electronic device 501 may launch an application (e.g., a payment application or a financial application). For example, if a user performs a bottom-to-top touch swipe on a display 520 which outputs a home screen, the payment application may be launched. For another example, the financial application may be launched in response to a touch on an icon.

In operation 707, the electronic device 501 may perform user authentication for the launched application. For example, the user authentication may include PIN authentication, iris authentication, and fingerprint authentication. If the user authentication succeeds, the electronic device 501 may proceed with operation 709.

In operation 709, the electronic device 501 may output a screen including a specified GUI object on a display 520. According to an embodiment, the specified GUI object (e.g., a button or the like) may correspond to an object implemented for financial account linkage between the payment application and the financial application.

In operation 711, the electronic device 501 may request the mobile payment service server 504 to perform account linkage. The request may include identification information of a financial application installed in the electronic device 501 among the applications included in the list received in operation 703 and a signature indicating the success of the user authentication in operation 707.

In operation 713, the mobile payment service server 504 may determine whether the account linkage request in operation 711 is valid through interaction between the financial institution server 505 and/or the authentication server 503. For example, the mobile payment service server 504 may verify authentication of a user using information about the signature.

In operation 715, the mobile payment service server 504 may initiate account linkage with the financial institution server 505 using the identification information and the signature information of the financial application installed in the electronic device 501, obtained in operation 711.

In operation 717, the financial institution server 505 may specify the user using the signature information and may determine whether there is previously linked account information (first account information) of the user. If there is the previously linked account information (first account information), the financial institution server 505 may proceed with operation 719. If there is no the previously linked account information (first account information), the financial institution server 505 may proceed with operation 725.

In operation 719, since the first account information is enrolled as account information linked to the electronic device 501, the financial institution server 505 may provide another account information (second account information) of the user, opened at the financial institution (which operates the financial institution server 505) to the mobile payment service server 504. The second account information may correspond to, for example, all or some of a plurality of other account information opened at the same financial institution by an owner of the first account information.

In operation 721, the mobile payment service server 504 may transmit the second account information, provided from the financial institution server 505, to the electronic device 501.

In operation 723, the electronic device 501 may enroll the second account information transmitted from the mobile payment service server 504 in the payment application.

In operation 725, since the first account information is not enrolled as the account information linked to the electronic device 501, the financial institution server 505 may request the electronic device 501 to perform user authentication.

In operation 727, the mobile payment service server 504 may transmit the user authentication request from the financial institution server 505 to the electronic device 501.

In operation 729, the electronic device 501 may perform user authentication (or identity authentication) using an authentication module 550 and/or interaction with the authentication server 503.

In operation 731, if the user authentication in operation 729 succeeds, the electronic device 501 may transmit a user authentication success message (e.g., a signature) to the financial institution server 505.

In operation 733, the mobile payment service server 504 may transmit the user authentication success message, provided from the electronic device 501, to the financial institution server 505.

In operation 735, the financial institution server 505 may determine whether there is an account opened by the user, based on the user authentication success message (e.g., the signature). If there is the account opened by the user, the financial institution server 505 may proceed with operation 737. If there is no the account opened by the user, the financial institution server 505 may proceed with operation 743.

Since there is the account opened by the user, in operation 737, the financial institution server 505 may provide all account information of the user, opened at the financial institution (which operates the financial institution server 505) or account information selected based on a user input to the mobile payment service server 504.

In operation 739, the mobile payment service server 504 may transmit the account information, provided from the financial institution server 505, to the electronic device 501.

In operation 741, the electronic device 501 may enroll the account information transmitted from the mobile payment service server 504 in the payment application.

Since there is no the account opened by the user, in other words, since there is no the account itself to be linked, in operation 743, the financial institution server 505 may transmit an error message to the mobile payment service server 504.

In operation 745, the mobile payment service server 504 may transmit the error message, provided from the financial institution server 505, to the electronic device 501.

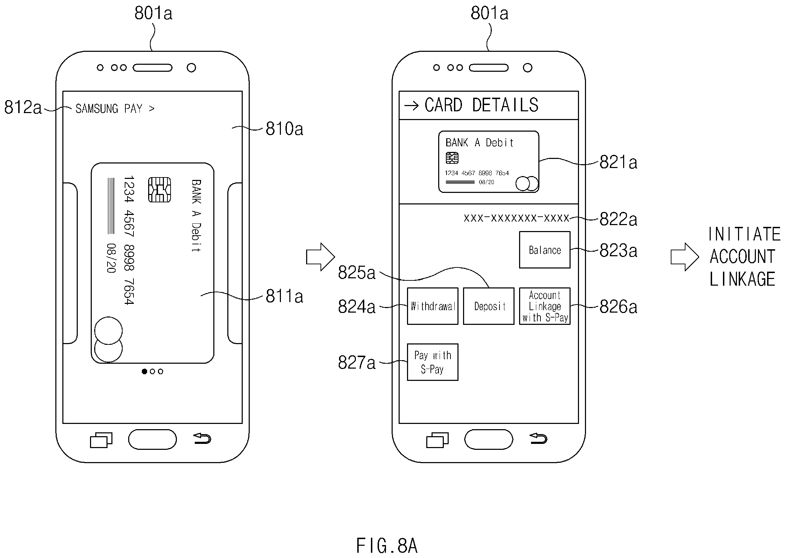

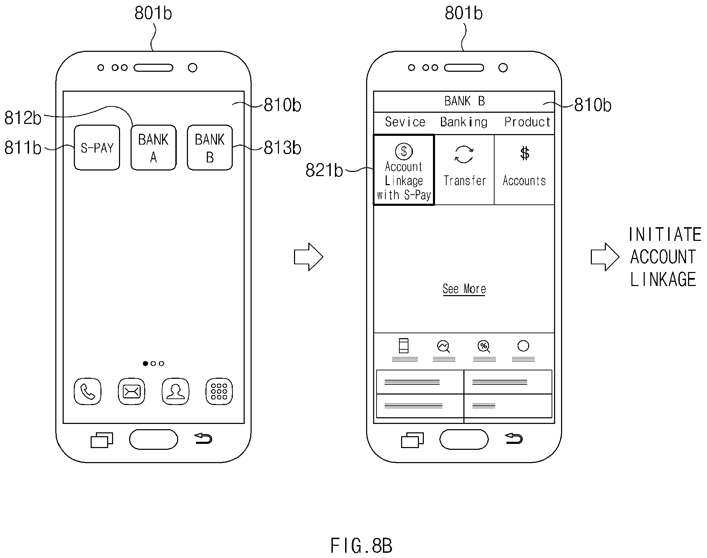

FIGS. 8A and 8B are graphic user interface (GUI) screens illustrating a method for enrolling a financial account according to various embodiments of the present disclosure.

Referring to FIG. 8A, an electronic device 801a in which a screen where a payment application is executed (or launched) is output on a display 810a is shown. The screen may include a GUI object 811a indicating a card linked to a financial account and a GUI object 812a for entering a setting menu. For example, if a long-press on the GUI object 811a is performed or if the GUI object 812a is selected (e.g., touched), a screen including card details of the card linked to the financial account may be output on the display 810a.

According to an embodiment, a GUI object 821a indicating the card, linked account information 822a, a GUI object 823a to which a balance inquiry function is assigned, a GUI object 824a to which a withdrawal function is assigned, a GUI object 825a to which a deposit function is assigned, a GUI object 826a to which an account linkage function with a payment application is assigned, and a GUI object 827 a to which a payment function is assigned may be included in the screen including the card details.

According to an embodiment, if the GUI object 826a to which the account linkage function with the payment application is assigned is selected by a user input, account linkage according to according to various embodiments of the present disclosure may be performed. For example, the selection on the GUI object 826a may correspond to 'Yes' in operation 609 shown in FIG. 6A or operation 709 shown in FIG. 7.

Referring to FIG. 8B, an electronic device 801b in which a home screen is output on a display 810b is shown. Various application icons (e.g., application icons 811b, 812b, and 813b and the like) may be included in the home screen. For example, if the icon 813b indicating a mobile banking application of bank B is selected (e.g., touched), the mobile banking application of bank B may be executed and a GUI screen may output on the display 810b after user authentication is completed.

According to an embodiment, GUI objects for various services/functions provided from bank B may be included in a GUI screen of the mobile banking application of bank B. For example, according to an embodiment, if a GUI object 821 to which the account linkage function with the payment application is assigned is selected by a user input, the account linkage according to various embodiments of the present disclosure may be performed. For example, the selection on the GUI object 821b may correspond to 'Yes' in operation 609 shown in FIG. 6A or operation 709 shown in FIG. 7.

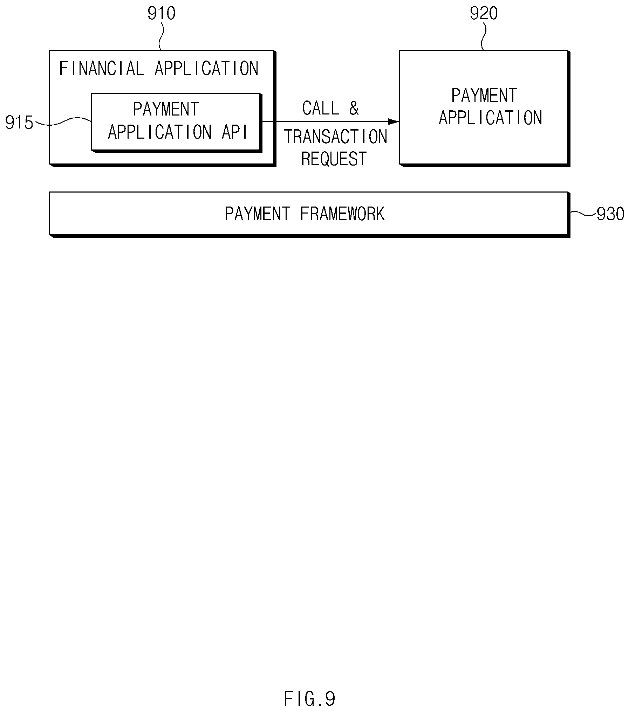

FIG. 9 illustrates a block diagram depicting a transaction using a financial account according to an embodiment of the present disclosure.

Referring to FIG. 9, a processor (e.g., a processor 570 of FIG. 5) may execute a financial application and a payment application and may load a financial application process 910 and a payment application process 920 to a (volatile) memory. The financial application process 910 and the payment application process 920 may exist on an upper layer of a payment framework 930 (e.g., a payment manager 354 shown in FIG. 3).

The financial application process 910 and the payment application process 920 may be software elements implemented by the processor and may be implemented on, for example, an application layer. According to an embodiment, the financial application process 910 may include a payment application API 915 implemented by an SDK of the payment application.

According to an embodiment, if the financial application is executed or launched, the processor of the electronic device may activate the financial application process 910 and may output a screen, where the financial application is executed, on a display (e.g., a display 520 of FIG. 5). If a GUI object implemented according to various embodiments of the present disclosure may be included in the screen. The GUI object may be programmed based on the SDK of the payment application and may correspond to an object implemented to initiate a transaction based on account information associated with the GUI object.

For example, if the GUI object selected, the financial application process 910 may call the payment application process 920. The processor of the electronic device may output a screen, where the payment application is executed, on the display. In this case, the financial application process 910 may transmit a transaction request message to the payment application process 920 through inter-process communication (IPC). For example, the transaction request message may include financial account information associated with the GUI object and/or information indicating a specified transaction type (e.g., payment, withdrawal, transfer, or the like).

The payment application process 920 may verify the financial account information and/or the information indicating the transaction type, included in the transaction request message and may select a card linked to the financial account information. The payment application process 920 may perform a transaction according to the transaction type included in the transaction request message using data of the selected card.

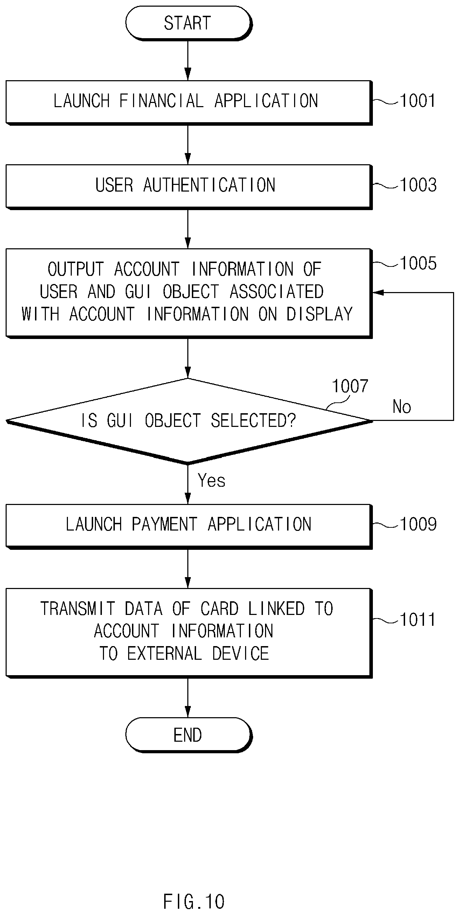

FIG. 10 illustrates a flowchart depicting a transaction method using a financial account according to an embodiment of the present disclosure.

Referring to FIG. 10, the transaction method using the financial account according to an embodiment may include operations 1001 to 1011. Operations 1001 to 1011 may be performed by, for example, an electronic device 501 shown in FIG. 5. Each of operations 1001 to 1011 may be implemented with, for example, instructions performable (or executable) by a processor 570 of the electronic device 501. The instructions may be stored in, for example, a computer storage medium or a memory 530 of the electronic device 501. Hereinafter, reference numerals of FIG. 5 are used in describing operations 1001 to 1011.

In operation 1001, the processor 570 of the electronic device 501 may launch a financial application. A specified execution screen (e.g., a log-in screen) may be output on a display 520 in response to the launching of the financial application.

In operation 1003, the processor 570 may perform user authentication (e.g., log-in) using an authentication module 550. For example, the user authentication may include PIN authentication, iris authentication, and fingerprint authentication. If the user authentication succeeds, the processor 570 may proceed with operation 1005.

In operation 1005, the processor 570 may output account information of the user authenticated in operation 1003 and a GUI object (e.g., a button or the like) associated with the account information on the display 520. According to an embodiment, the GUI object may correspond to an object implemented to initiate a transaction (e.g., a payment transaction or the like) based on account information associated with the GUI object.

In operation 1007, the processor 570 may determine whether the GUI object is selected. If the GUI object is selected, the processor 570 may proceed with operation 1009. If the GUI object is not selected, the processor 570 may return to operation 1005.

In operation 1009, the processor 570 may call a payment application in response to the selection on the GUI object and may launch the payment application.

In operation 1011, the processor 570 may transmit data of a card linked to account information (associated with the GUI object) to an external device 502 via a local wireless communication circuit 560 based on the payment application. The external device 502 may perform a specified transaction (e.g., payment, withdrawal, transfer, or the like) using the received data.

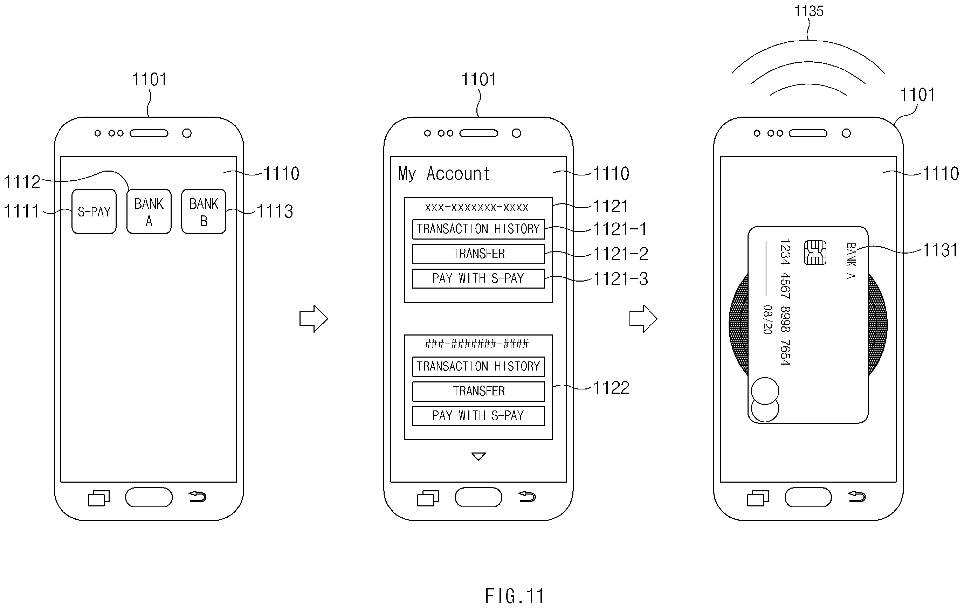

FIG. 11 illustrates a GUI screen depicting a transaction method using a financial account according to an embodiment of the present disclosure.

Referring to FIG. 11, an electronic device 1101 in which a home screen is output on a display 1110 is shown. Various application icons (e.g., application icons 1111 to 1113) may be included in the home screen. For example, if the icon 1112 indicating a mobile banking application of bank A is selected (e.g., touched), the mobile banking application of bank B may be executed and a GUI screen may be displayed on a display 1110 after user authentication is completed.

According to an embodiment, GUI objects for various financial services provided from bank A for each account may be included in a GUI screen of the mobile banking application of bank A. For example, an authenticated user may have a first account 1121 (an account number: XXX-XXXXXXX-XXXX) and a second account 1122 (an account number: ###-#######-####). For example, to provide a financial service using the first account 1121, a screen including a GUI object 1121-1 to which a transaction history inquiry function is assigned, a GUI object 1121-2 to which a fund transfer function is assigned, and a GUI object 1121-3 to which a debit card payment function is assigned may be output on the display 1110.

For example, if the GUI object 1121-3 to which the debit card payment function is assigned is selected by a user input, a payment application may be called and launched in response to the selection on the GUI object 1121-3. If the payment application is launched, the electronic device 1101 may output an image 1131 of a card linked to the first account 1121 (the account number: XXX-XXXXXXX-XXXX) on the display 1110 and may transmit data of the card to an external device 502 (e.g., a POS device or an ATM) over a wireless channel 1135 (e.g., an electromagnetic field by an NFC module or a magnetic field by an MST module). The external device 502 may perform a specified transaction (e.g., payment, withdrawal, transfer, or the like) using the received data of the card.

According to various embodiments of the present disclosure, a user may enroll a plurality of accounts opened at a plurality of financial institutions collectively for each financial institution. For example, if m accounts are opened at each of n financial institutions, in general, user/identity authentication of m x n times may be needed to enroll all the accounts in the payment application. According to various embodiments of the present disclosure, since accounts are enrolled once for each financial institution, it may be sufficient for user/identity authentication of n times. Thus, the number of times of user/identity authentication requested when each account is enrolled may be reduced. Further, according to various embodiments of the present disclosure, a card linked to a financial account may be simply used for a mobile transaction based on a financial application including an API of the payment application.

An electronic device according to an embodiment may include a display, a local wireless communication circuit, a memory configured to store a financial application and a payment application, and a processor configured to be electrically connected with the display, the local wireless communication circuit, and the memory and launch the financial application. The processor may be configured to output account information of a user and a graphic user interface (GUI) object associated with the account information on the display, launch the payment application in response to selecting the GUI object, and transmit data of a card linked to the account information to an external device via the local wireless communication circuit.

According to an embodiment, the electronic device may further include an authentication module configured to perform user authentication. The account information and the GUI object may be output on the display after the user authentication is accomplished.

According to an embodiment, the authentication module may perform the user authentication using iris authentication, fingerprint authentication, or personal identification number (PIN) authentication.

According to an embodiment, the GUI object may be programmed based on a software development kit (SDK) of the payment application.

According to an embodiment, the local wireless communication circuit may include a magnetic secure transmission or magnetic stripe transmission (MST) module and a near field communication (NFC) module.

According to an embodiment, the data of the card may include at least one of a primary account number (PAN), a token, a one-time token (OTT), or a cryptogram with which at least part of the PAN is replaced.

According to an embodiment, the external device may include a point-of-sale (POS) device or an automatic teller's machine (ATM), including a local wireless communication circuit.

A method of an electronic device according to an embodiment may include launching a financial application, outputting account information of a user and a graphic user interface (GUI) object associated with the account information on the display, launching a payment application in response to selecting the GUI object, and transmitting data of a card linked to the account information to an external device via a local wireless communication circuit.

According to an embodiment, the method may further include authenticating the user using an authentication module. The account information and the GUI object may be outputted after the user is authenticated successfully.

According to an embodiment, the authentication module comprises at least one of an iris sensor, a fingerprint sensor, or a graphic user interface for entering personal identification number (PIN).

According to an embodiment, the GUI object is programmed based on a software development kit (SDK) of the payment application.

According to an embodiment, the local wireless communication circuit comprises a magnetic secure transmission or magnetic stripe transmission (MST) module and a near field communication (NFC) module.

According to an embodiment, the method the data of the card comprises at least one of a primary account number (PAN), a token, a one-time token (OTT), or a cryptogram that replaces at least part of the PAN.

According to an embodiment, the external device comprises a point-of-sale (POS) device or an automatic teller's machine (ATM), including a local wireless communication circuit for receiving the data of the card.

An electronic device according to an embodiment may include a display, a communication circuit configured to communicate with an external device, a memory configured to store a financial application and a payment application, and a processor configured to be electrically connected with the display, the communication circuit, and the memory and launch the payment application. The processor may be configured to output a screen, where the payment application is executed, including a specified GUI object on the display, obtain identification information of the financial application if the specified GUI object is selected and transmit the obtained identification information to the external device via the communication circuit, and receive account information of a user, opened at a financial institution corresponding to the financial application, via the communication circuit from the external device.

According to an embodiment, the processor may enroll the received account information in the payment application.

According to an embodiment, the processor may link the received account information to corresponding card data.

According to an embodiment, the electronic device may further include an authentication module configured to perform user authentication. The processor may further transmit a signature associated with the user authentication to the external device in response to selecting the specified GUI object.

According to an embodiment, the processor may receive a list of financial applications of a financial institution which allows account linkage via the communication circuit from the external device and may obtain identification information of a financial application installed in the electronic device among the financial applications included in the list.

According to an embodiment, the payment application may enroll first account information of the user, opened at the financial institution. The processor may receive second account information of the user, opened at the financial institution, via the communication circuit from the external device.

According to an embodiment, the second account information may include at least part of all account information of the user, opened at the financial institution.

According to an embodiment, the communication circuit may further communicate with an authentication server (e.g., a third party authentication server). If account information of the user, opened at the financial institution, is not enrolled in the payment application, the processor may perform user authentication through interaction with the authentication server and may receive at least part of all account information of the user, opened at the financial institution, via the communication circuit from the external device.

An electronic device according to an embodiment may include a display, a communication circuit configured to communicate with an external device, a memory configured to store a financial application, and a processor configured to be electronically connected with the display, the communication circuit, and the memory and launch the financial application. The processor may be configured to output a screen, where the financial application is executed, including a specified GUI object, on the display, obtain identification information of the financial application if the specified GUI object is selected and transmit the obtained identification information to the external device, and receive account information of a user, opened at a financial institution corresponding to the financial application, via the communication circuit from the external device.

According to an embodiment, the memory may further store a payment application. The specified GUI object may be programmed based on an SDK of the payment application. The processor may enroll the received account information in the payment application.

According to an embodiment, the processor may link the received account information to card data used in the payment application.

According to an embodiment, if first account information of the user, opened at the financial institution, is enrolled in the payment application, the processor may receive second account information of the user, opened at the financial institution, via the communication circuit from the external device.

According to an embodiment, the communication circuit may further communicate with an authentication server (e.g., a third party authentication server). If account information of the user, opened at the financial institution, is not enrolled in the payment application, the processor may perform user authentication through interaction with the authentication server and may receive at least part of all account information of the user, opened at the financial institution, via the communication circuit from the external device.

The terminology "module" used herein may mean, for example, a unit including one of hardware, software, and firmware or two or more combinations thereof. The terminology "module" may be interchangeably used with, for example, terminologies "unit", "logic", "logical block", "component", or "circuit", and the like. The "module" may be a minimum unit of an integrated component or a part thereof. The "module" may be a minimum unit performing one or more functions or a part thereof. The "module" may be mechanically or electronically implemented. For example, the "module" may include at least one of an application-specific integrated circuit (ASIC) chip, field-programmable gate arrays (FPGAs), or a programmable-logic device, which is well known or will be developed in the future, for performing certain operations.

According to various embodiments, at least part of a device (e.g., modules or the functions) or a method (e.g., operations) may be implemented with, for example, instructions stored in computer-readable storage media which have a program module. When the instructions are executed by a processor (e.g., a processor 120 of FIG. 1), one or more processors may perform functions corresponding to the instructions. The computer-readable storage media may be, for example, a memory 130 of FIG. 1.

The computer-readable storage media may include a hard disc, a floppy disk, magnetic media (e.g., a magnetic tape), optical media (e.g., a compact disc read only memory (CD-ROM) and a digital versatile disc (DVD)), magneto-optical media (e.g., a floptical disk), a hardware device (e.g., a ROM, a random access memory (RAM), or a flash memory, and the like), and the like. Also, the program instructions may include not only mechanical codes compiled by a compiler but also high-level language codes which may be executed by a computer using an interpreter and the like. The above-mentioned hardware device may be configured to operate as one or more software modules to perform operations according to various embodiments of the present disclosure, and vice versa.

Modules or program modules according to various embodiments may include at least one or more of the above-mentioned elements, some of the above-mentioned elements may be omitted, or other additional elements may be further included. Operations executed by modules, program modules, or other elements may be executed by a successive method, a parallel method, a repeated method, or a heuristic method. Also, some operations may be executed in a different order or may be omitted, and other operations may be added.

According to various embodiments disclosed in the present disclosure, the electronic device may enroll a plurality of accounts, opened at a plurality of financial institutions, in the payment application collectively for each financial institution. Further, the electronic device may very simply use a card linked to a financial account for a mobile transaction using the financial application including an API of the payment application. In addition, the electronic device may provide a variety of effects directly or indirectly ascertained through the present disclosure.

While the present disclosure has been shown and described with reference to various embodiments thereof, it will be understood by those skilled in the art that various changes in form and details may be made therein without departing from the spirit and scope of the present disclosure as defined by the appended claims and their equivalents.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device, comprising:
a display;
a local wireless communication circuit;
a memory configured to store a financial application and a payment application; and
a processor configured to be electrically connected with the display, the local wireless communication circuit, and the memory,
wherein the processor is configured to:
launch the financial application;
output account information of a user and a graphic user interface (GUI) object associated with the account information on the display;
launch the payment application in response to selecting the GUI object; and
transmit data of a card linked to the account information to an external device via the local wireless communication circuit.

2. The electronic device of claim 1, further comprising:
an authentication module configured to perform user authentication,
wherein the account information and the GUI object are output on the display after the user authentication is accomplished.

3. The electronic device of claim 2, wherein the authentication module performs the user authentication using at least one of an iris authentication, a fingerprint authentication, or a personal identification number (PIN) authentication.

4. The electronic device of claim 1, wherein the GUI object is programmed based on a software development kit (SDK) of the payment application.

5. The electronic device of claim 1, wherein the local wireless communication circuit comprises a magnetic secure transmission or magnetic stripe transmission (MST) module and a near field communication (NFC) module.

6. The electronic device of claim 1, wherein the data of the card comprises at least one of a primary account number (PAN), a token, a one-time token (OTT), or a cryptogram that replaces at least part of the PAN.

7. The electronic device of claim 1, wherein the external device comprises a point-of-sale (POS) device or an automatic teller's machine (ATM), including a local wireless communication circuit.

8. A method of an electronic device comprising:
launching a financial application;
outputting account information of a user and a graphic user interface (GUI) object associated with the account information on the display;
launching a payment application in response to selecting the GUI object; and
transmitting data of a card linked to the account information to an external device via a local wireless communication circuit.

9. The method of claim 8, further comprising:
authenticating the user using an authentication module;
wherein the account information and the GUI object is outputted after the user is authenticated successfully.

10. The method of claim 9, wherein the authentication module comprises at least one of an iris sensor, a fingerprint sensor, or a graphic user interface for entering personal identification number (PIN).

11. The method of claim 8, wherein the GUI object is programmed based on a software development kit (SDK) of the payment application.

12. The method of claim 8, wherein the local wireless communication circuit comprises a magnetic secure transmission or magnetic stripe transmission (MST) module and a near field communication (NFC) module.

13. The method of claim 8, wherein the data of the card comprises at least one of a primary account number (PAN), a token, a one-time token (OTT), or a cryptogram that replaces at least part of the PAN.

14. The method of claim 8, wherein the external device comprises a point-of-sale (POS) device or an automatic teller's machine (ATM), including a local wireless communication circuit for receiving the data of the card.
